(19) **Europäisches Patentamt European Patent Office Office européen des brevets**

(11) **EP 4 478 748 A1**

(12) **EUROPEAN PATENT APPLICATION**
published in accordance with Art. 153(4) EPC

(43) Date of publication:
**18.12.2024 Bulletin 2024/51**

(51) International Patent Classification (IPC):
*H04W 4/02* (2018.01)

(21) Application number: 23762853.2

(52) Cooperative Patent Classification (CPC):
**G01S 13/74; H04W 4/02; H04W 24/08; H04W 24/10**

(22) Date of filing: 28.02.2023

(86) International application number:
**PCT/CN2023/078616**

(87) International publication number:
**WO 2023/165454 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2022   CN 202210200293**
　　　　　　**11.11.2022   CN 202211414724**
　　　　　　**15.02.2023   CN 202310146385**

(71) Applicant: **Huawei Technologies Co., Ltd.
Shenzhen, Guangdong 518129 (CN)**

(72) Inventors:
• **LIU, Chenchen
　Shenzhen, Guangdong 518129 (CN)**
• **GUO, Ziyang
　Shenzhen, Guangdong 518129 (CN)**
• **YANG, Xun
　Shenzhen, Guangdong 518129 (CN)**
• **QIAN, Bin
　Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57)　Embodiments of this application provide a communication method and apparatus. The method includes: sending, on a first narrowband channel, a first frame used to trigger data measurement; sending a first UWB signal and receiving a second UWB signal on a first ultra-wideband UWB channel, where the first UWB signal and the second UWB signal are used to perform the data measurement to obtain a data measurement result; and specifically, sending, on a second narrowband channel, a first trigger frame used to trigger reporting of a first measurement result. A trigger frame is delivered to trigger a measurement result reporting procedure. This avoids a reporting failure when the measurement result is directly reported on the first narrowband channel.

FIG. 4

## Description

This application claims priorities to Chinese Patent Application No. 202210200293.2, filed with the China National Intellectual Property Administration on March 2, 2022 and entitled "COMMUNICATION METHOD AND APPARATUS", to Chinese Patent Application No. 202211414724.1, filed with the China National Intellectual Property Administration on November 11, 2022 and entitled "COMMUNICATION METHOD AND APPARATUS", and to Chinese Patent Application No. 202310146385.1, filed with the China National Intellectual Property Administration on February 15, 2023 and entitled "COMMUNICATION METHOD AND APPARATUS", all of which are incorporated herein by reference in their entireties.

## TECHNICAL FIELD

Embodiments of this application relate to the communication field, and more specifically, to a communication method and apparatus.

## BACKGROUND

An ultra-wideband (Ultra-Wideband, UWB) technology is a wireless carrier communication technology in which nanosecond-level non-sinusoidal narrow impulses are used for data transmission. Because of a very narrow impulse and very low radiation spectral density of a UWB system, the UWB system has advantages of a strong multipath resolution capability, low power consumption, high confidentiality, and the like.

In a ranging or sensing scenario, precision of a measurement or sensing result is greatly related to a signal bandwidth, and a larger signal bandwidth indicates higher precision of a result obtained through sensing or ranging. Therefore, it may be considered that a reference signal for ranging or sensing is received and sent by using the UWB system, and another reference signal and/or data is transmitted according to a narrowband protocol. Such a processing manner may be understood as narrowband protocol-assisted UWB ranging or sensing.

Currently, in a narrowband protocol-assisted UWB ranging or sensing method, because no signal is received or sent in a narrowband system in a time period of UWB signal-based ranging or sensing, a narrowband channel may have been used by another device, and consequently a measurement result cannot be fed back in time. Therefore, how to improve performance of the narrowband protocol-assisted UWB ranging or sensing method becomes an urgent problem to be resolved.

## SUMMARY

Embodiments of this application provide a communication method. In a narrowband protocol-assisted UWB measurement data scenario, after a measurement procedure ends, a trigger frame is delivered to trigger a measurement result reporting procedure. This avoids a reporting failure when a measurement result is directly reported.

According to a first aspect, a communication method is provided. The method may be performed by an initiator device, or may be performed by a component (for example, a chip or a circuit) of an initiator device. This is not limited. For ease of description, an example in which the method is performed by the initiator device is used for description below.

The method includes: sending a first frame on a first narrowband channel, where the first frame is used to trigger data measurement; sending a first ultra-wideband UWB signal on a first ultra-wideband UWB channel, and receiving a second UWB signal on the first UWB channel, where the first UWB signal and the second UWB signal are used to perform the data measurement to obtain a data measurement result; and sending a first trigger frame on a second narrowband channel, where the first trigger frame is used to trigger reporting of a first measurement result, and the first measurement result includes all or a part of the data measurement result.

Based on the foregoing technical solution, after triggering the data measurement, the initiator device completes the data measurement based on the first UWB signal and the second UWB signal, and obtains the data measurement result. In addition, the first trigger frame is delivered to trigger a measurement result reporting procedure. This can effectively improve measurement result reporting reliability, and avoid a reporting failure when the measurement result is directly reported on the first narrowband channel.

With reference to the first aspect, in some implementations of the first aspect, the method further includes: sending first indication information, where the first indication information indicates a narrowband channel for sending a trigger frame, the narrowband channel is used to send the trigger frame, the trigger frame includes the first trigger frame, and the narrowband channel includes the second narrowband channel.

Based on the foregoing technical solution, to enable a responder device to correctly receive the first trigger frame, a corresponding narrowband channel for sending a trigger frame used to trigger the measurement result reporting procedure may be negotiated in advance by using the first indication information

With reference to the first aspect, in some implementations of the first aspect, the method further includes: receiving a second frame (response) on the first narrowband channel, where the second frame is used to respond to the first frame.

Based on the foregoing technical solution, the initiator device may determine, when receiving the second frame that is in response to the first frame and that is fed back by the responder device, that the data measurement can be performed. This ensures that the data measurement is successfully performed.

With reference to the first aspect, in some implementations of the first aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

The second frame may include a plurality of types of information, to help the initiator device learn of a transmission status of the second UWB signal for the data measurement, and determine, based on the transmission status of the second UWB signal, whether a data measurement procedure is successfully performed.

With reference to the first aspect, in some implementations of the first aspect, the method further includes: receiving the first measurement result on the second narrowband channel.

Based on the foregoing technical solution, the initiator device sends, on the second narrowband channel, the first trigger frame used to trigger reporting of the first measurement result, and the responder device reports the first measurement result in time on the narrowband channel for receiving the first trigger frame. This ensures effectiveness of reporting the first measurement result.

With reference to the first aspect, in some implementations of the first aspect, when the first measurement result is the part of the data measurement result, the method further includes: sending a second trigger frame on a third narrowband channel, where the second trigger frame is used to trigger reporting of a second measurement result; and receiving the second measurement result on the third narrowband channel, where the second measurement result is all or a part of a measurement result other than the first measurement result in the data measurement result.

Based on the foregoing technical solution, the measurement result may be reported in segments. That is, a trigger frame delivered each time may specify a part of the measurement result for reporting, and the responder device does not need to feed back all of the measurement result at a time. When a data amount of the measurement result is large, efficiency and reliability of feeding back the result can be effectively improved, and flexibility of the solution can be improved.

With reference to the first aspect, in some implementations of the first aspect, when the first measurement result is all of the data measurement result, the method further includes: sending a second trigger frame on a third narrowband channel, where the second trigger frame is used to trigger reporting of the first measurement result; and receiving the first measurement result on the third narrowband channel.

Based on the foregoing technical solution, the initiator device may deliver a trigger frame on a different channel to trigger reporting of the measurement result. This significantly enhances system robustness. For example, when the measurement result fails to be received on a narrowband channel, the initiator device may re-deliver a trigger frame on another channel to trigger reporting of the measurement result.

With reference to the first aspect, in some implementations of the first aspect, the first frame includes at least one of the following information: identifier information of the responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

The first frame may include a plurality of types of information, to help the responder device learn of a transmission status of the first UWB signal for the data measurement, and determine, based on the transmission status of the first UWB signal, whether a data measurement procedure is successfully performed.

With reference to the first aspect, in some implementations of the first aspect, the sending a first UWB signal on a first UWB channel includes: dividing the first UWB signal into a plurality of first segment signals, where a time length of each first segment signal is less than a first threshold; and sending one first segment signal on the first UWB channel at intervals of the first threshold.

With reference to the first aspect, in some implementations of the first aspect, the second UWB signal is divided into a plurality of second segment signals, a time length of each second segment signal is less than the first threshold, and the receiving a second UWB signal on the first UWB channel includes: receiving one second segment signal on the first UWB channel within an interval between time for sending two adjacent first segment signals.

A UWB signal is transmitted in segments. This increases instantaneous power of a transmit signal, enlarges signal coverage, and increases a signal-to-noise ratio of a signal received at a receiving end.

With reference to the first aspect, in some implementations of the first aspect, the first trigger frame includes information indicating content included in the first measurement result, and/or information indicating a form of the first measurement result.

Based on the foregoing technical solution, reporting of the measurement result may be triggered by using the trigger frame, and the content and the form of the measurement result are further indicated, so that the responder device reports the required measurement result. This improves solution performance.

According to a second aspect, a communication method is provided. The method may be performed by a responder device, or may be performed by a component (for example, a chip or a circuit) of a responder device. This is not limited. For ease of description, the following uses an example in which the method is performed by the responder device for description.

The method includes: receiving a first frame on a first narrowband channel, where the first frame is used to trigger data measurement; receiving a first ultra-wideband UWB signal on a first ultra-wideband UWB channel, and sending a second UWB signal on the first UWB channel, where the first UWB signal and the second UWB signal are used to perform the data measurement to obtain a data measurement result; and receiving a first trigger frame on a second narrowband channel, where the first trigger frame is used to trigger reporting of a first measurement result, and the first measurement result includes all or a part of the data measurement result.

With reference to the second aspect, in some implementations of the second aspect, the method further includes: receiving first indication information, where the first indication information indicates a narrowband channel for sending a trigger frame, the narrowband channel is used to send the trigger frame, the trigger frame includes the first trigger frame, and the narrowband channel includes the second narrowband channel.

With reference to the second aspect, in some implementations of the second aspect, the method further includes: sending a second frame on the first narrowband channel, where the second frame is used to respond to the first frame.

With reference to the second aspect, in some implementations of the second aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

With reference to the second aspect, in some implementations of the second aspect, the method further includes: sending the first measurement result on the second narrowband channel.

With reference to the second aspect, in some implementations of the second aspect, when the first measurement result is the part of the data measurement result, the method further includes: receiving a second trigger frame on a third narrowband channel, where the second trigger frame is used to trigger reporting of a second measurement result; and sending the second measurement result on the third narrowband channel, where the second measurement result is all or a part of a measurement result other than the first measurement result in the data measurement result.

With reference to the second aspect, in some implementations of the second aspect, when the first measurement result is all of the data measurement result, the method further includes: receiving a second trigger frame on a third narrowband channel, where the second trigger frame is used to trigger reporting of the first measurement result; and sending the first measurement result on the third narrowband channel.

With reference to the second aspect, in some implementations of the second aspect, the first frame includes at least one of the following information: identifier information of the responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

With reference to the second aspect, in some implementations of the second aspect, the sending a second UWB signal on the first UWB channel includes: dividing the second UWB signal into a plurality of second segment signals, where a time length of each second segment signal is less than a first threshold; and sending one second segment signal on the first UWB channel at intervals of the first threshold.

With reference to the second aspect, in some implementations of the second aspect, the first UWB signal is divided into a plurality of first segment signals, a time length of each first segment signal is less than the first threshold, and the receiving a first UWB signal on a first UWB channel includes: receiving one first segment signal on the first UWB channel within an interval between time for sending two adjacent second segment signals.

With reference to the second aspect, in some implementations of the second aspect, the first trigger frame includes information indicating content included in the first measurement result, and/or information indicating a form of the first measurement result.

For beneficial effect of the method shown in the second aspect and the possible designs of the second aspect, refer to the beneficial effect in the first aspect and the possible designs of the first aspect.

According to a third aspect, a communication apparatus is provided. The apparatus is configured to perform the method provided in the first aspect.

The apparatus includes: a sending unit, configured to send a first frame on a first narrowband channel, where the first frame is used to trigger data measurement, and the sending unit is further configured to send a first ultra-wideband UWB signal on a first ultra-wideband UWB channel; and a receiving unit, configured to receive a second UWB signal on the first UWB channel, where the first UWB signal and the second UWB signal are used to perform the data measurement to obtain a data measurement result, and the sending unit is further configured to, when transmission of the first UWB signal and the second UWB signal is complete, a transceiver unit sends a first trigger frame on a second narrowband channel, the first trigger frame is used to trigger reporting of a first measurement result, and the first measurement result includes all or a part of the data measurement result.

With reference to the third aspect, in some implementations of the third aspect, the sending unit is further configured to send first indication information, the first indication information indicates a narrowband channel for sending a trigger frame, the narrowband channel is used to send the trigger frame, the trigger frame includes the first trigger frame, and the narrowband channel includes the second narrowband channel.

With reference to the third aspect, in some implementations of the third aspect, the receiving unit is further configured to receive a second frame on the first narrowband channel, and the second frame is used to respond to the first frame.

With reference to the third aspect, in some implementations of the third aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

With reference to the third aspect, in some implementations of the third aspect, the receiving unit is further configured to receive the first measurement result on the second narrowband channel.

With reference to the third aspect, in some implementations of the third aspect, when the first measurement result is the part of the data measurement result, the sending unit is further configured to send a second trigger frame on a third narrowband channel, and the second trigger frame is used to trigger reporting of a second measurement result; and the receiving unit is further configured to receive the second measurement result on the third narrowband channel, and the second measurement result is all or a part of a measurement result other than the first measurement result in the data measurement result.

With reference to the third aspect, in some implementations of the third aspect, when the first measurement result is all of the data measurement result, the sending unit is further configured to send a second trigger frame on a third narrowband channel, and the second trigger frame is used to trigger reporting of the first measurement result; and the receiving unit is further configured to receive the first measurement result on the third narrowband channel.

With reference to the third aspect, in some implementations of the third aspect, the first frame includes at least one of the following information: identifier information of a responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

With reference to the third aspect, in some implementations of the third aspect, the apparatus further includes: a processing unit, configured to divide the first UWB signal into a plurality of first segment signals, where a time length of each first segment signal is less than a first threshold; and that the sending unit sends the first UWB signal on the first UWB channel includes: The sending unit sends one first segment signal on the first UWB channel at intervals of the first threshold.

With reference to the third aspect, in some implementations of the third aspect, the second UWB signal is divided into a plurality of second segment signals, a time length of each second segment signal is less than the first threshold, and that the receiving unit receives the second UWB signal on the first UWB channel includes: The receiving unit receives one second segment signal on the first UWB channel within an interval between time for the sending unit to send two adjacent first segment signals.

With reference to the third aspect, in some implementations of the third aspect, the first trigger frame includes information indicating content included in the first measurement result, and/or information indicating a form of the first measurement result.

For beneficial effect of the method shown in the third aspect and the possible designs of the third aspect, refer to the beneficial effect in the first aspect and the possible designs of the first aspect.

According to a fourth aspect, a communication apparatus is provided. The apparatus is configured to perform the method provided in the second aspect.

The apparatus includes: a receiving unit, configured to receive a first frame on a first narrowband channel, where the first frame is used to trigger data measurement, and the receiving unit is further configured to receive a first ultra-wideband UWB signal on a first ultra-wideband UWB channel; and a sending unit, configured to send a second UWB signal on the first UWB channel, where the first UWB signal and the second UWB signal are used to perform the data measurement to obtain a data measurement result, and the receiving unit is further configured to receive a first trigger frame on a second narrowband channel, the first trigger frame is used to trigger reporting of a first measurement result, and the first measurement result includes all or a part of the data measurement result.

With reference to the fourth aspect, in some implementations of the fourth aspect, the receiving unit is further configured to receive first indication information, the first indication information indicates a narrowband channel for sending a trigger frame, the narrowband channel is used to send the trigger frame, the trigger frame includes the first trigger frame, and the narrowband channel includes the second narrowband channel.

With reference to the fourth aspect, in some implementations of the fourth aspect, the sending unit is further configured to send a second frame on the first narrowband channel, and the second frame is used to respond to the first frame.

With reference to the fourth aspect, in some implementations of the fourth aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

With reference to the fourth aspect, in some implementations of the fourth aspect, the sending unit is further configured to send the first measurement result on the second narrowband channel.

With reference to the fourth aspect, in some implementations of the fourth aspect, when the first measurement result is the part of the data measurement result, the receiving unit is further configured to receive a second trigger frame on a third narrowband channel, and the second trigger frame is used to trigger reporting of a second measurement result; and the sending unit is further configured to send the second measurement result on the third narrowband channel, and the second measurement result is all or a part of a measurement result other than the first measurement result in the data measurement result.

With reference to the fourth aspect, in some implementations of the fourth aspect, when the first measurement result is all of the data measurement result, the apparatus further includes: The receiving unit is further configured to receive a second trigger frame on a third narrowband channel, and the second trigger frame is used to trigger reporting of the first measurement result; and the sending unit is further configured to send the first measurement result on the third narrowband channel.

With reference to the fourth aspect, in some implementations of the fourth aspect, the first frame includes at least one of the following information: identifier information of a responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

With reference to the fourth aspect, in some implementations of the fourth aspect, the apparatus further includes: a processing unit, configured to divide the second UWB signal into a plurality of second segment signals, where a time length of each second segment signal is less than a first threshold; and that the sending unit sends the second UWB signal on the first UWB channel includes: The sending unit sends one second segment signal on the first UWB channel at intervals of the first threshold.

With reference to the fourth aspect, in some implementations of the fourth aspect, the first UWB signal is divided into a plurality of first segment signals, a time length of each first segment signal is less than the first threshold, and the receiving unit receives the first UWB signal on the first UWB channel includes: The receiving unit receives one first segment signal on the first UWB channel within an interval between time for the sending unit to send two adjacent second segment signals.

With reference to the fourth aspect, in some implementations of the fourth aspect, the first trigger frame includes information indicating content included in the first measurement result, and/or information indicating a form of the first measurement result.

For beneficial effect of the apparatus shown in the fourth aspect and the possible designs of the fourth aspect, refer to the beneficial effect in the second aspect and the possible designs of the second aspect.

According to the communication methods provided in the first aspect and the second aspect, after the measurement procedure ends, the trigger frame is delivered to trigger the measurement result reporting procedure. This avoids the reporting failure when the measurement result is directly reported. This application further provides another communication method. In a data measurement process, a trigger frame is delivered to trigger a procedure of reporting a measurement result of a previous measurement periodicity, so as to support reporting of measurement results by some responder devices that cannot feed back a measurement result in time. The following describes the communication method with reference to the fifth aspect and the sixth aspect.

According to a fifth aspect, a communication method is provided. The method may be performed by an initiator device, or may be performed by a component (for example, a chip or a circuit) of an initiator device. This is not limited. For ease of description, an example in which the method is performed by the initiator device is used for description below.

The method includes: sending a first frame on a first narrowband channel, where the first frame is used to trigger data measurement in a first periodicity; sending a first ultra-wideband UWB signal on a first ultra-wideband UWB channel, and receiving a second UWB signal on the first UWB channel, where the first UWB signal and the second UWB signal are used to perform the data measurement to obtain a data measurement result; and sending a third trigger frame on the first narrowband channel when sending the first UWB signal, where the third trigger frame is used to trigger reporting of a third measurement result, the third measurement result includes all or a part of a data measurement result in a second periodicity, and the second periodicity is a measurement periodicity before the first periodicity.

Based on the foregoing technical solution, the initiator device triggers the data measurement, completes the data measurement based on the first UWB signal and the second UWB signal, and obtains the data measurement result. In addition, in a transmission process of the first UWB signal and the second UWB signal, the third trigger frame is delivered to trigger a procedure of reporting a measurement result of another periodicity before a current measurement periodicity, and reporting of a measurement result of a previous periodicity is triggered in the current measurement periodicity. This helps a responder device that has not completed reporting a measurement result in the previous periodicity to report a measurement result.

With reference to the fifth aspect, in some implementations of the fifth aspect, the method further includes: sending second indication information, where the second indication information indicates a narrowband channel for sending a trigger frame, the narrowband channel is used to send the trigger frame, the trigger frame includes the third trigger frame, and the narrowband channel includes the first narrowband channel.

Based on the foregoing technical solution, to enable a responder device to correctly receive the third trigger frame, a corresponding narrowband channel for sending a trigger frame used to trigger the measurement result reporting procedure may be negotiated in advance by using the second indication information.

With reference to the fifth aspect, in some implementations of the fifth aspect, the method further includes: receiving a second frame on the first narrowband channel, where the second frame is used to respond to the first frame.

Based on the foregoing technical solution, the initiator device may determine, when receiving the second frame that is in response to the first frame and that is fed back by the responder device, that the data measurement can be performed. This ensures that the data measurement is successfully performed.

With reference to the fifth aspect, in some implementations of the fifth aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

The second frame may include a plurality of types of information, to help the initiator device learn of a transmission status of the second UWB signal for the data measurement, and determine, based on the transmission status of the second UWB signal, whether a data measurement procedure is successfully performed.

With reference to the fifth aspect, in some implementations of the fifth aspect, the method further includes: receiving the third measurement result on the first narrowband channel.

Based on the foregoing technical solution, the initiator device sends, on the second narrowband channel, the first trigger frame used to trigger reporting of the first measurement result, and the responder device reports the first measurement result in time on the narrowband channel for receiving the first trigger frame. This ensures effectiveness of reporting the first measurement result.

With reference to the fifth aspect, in some implementations of the fifth aspect, the third measurement result is the part of the data measurement result in the second periodicity, and the method further includes: sending a fourth trigger frame on the first narrowband channel, where the fourth trigger frame is used to trigger the responder device to report a fourth measurement result; and receiving the fourth measurement result on the first narrowband channel, where the fourth measurement result is all or a part of a measurement result other than the third measurement result in the data measurement result in the second periodicity.

Based on the foregoing technical solution, the measurement result may be reported in segments. That is, a trigger frame delivered each time may specify a part of the measurement result for reporting, and the responder device does not need to feed back all of the measurement result at a time. When a data amount of the measurement result is large, efficiency and reliability of feeding back the result can be effectively improved, and flexibility of the solution can be improved.

With reference to the fifth aspect, in some implementations of the fifth aspect, the third measurement result is all of the data measurement result in the second periodicity, and the method further includes: sending a fourth trigger frame to the responder device on the first narrowband channel, where the fourth trigger frame is used to trigger the responder device to report the third measurement result; and receiving the third measurement result on the first narrowband channel.

Based on the foregoing technical solution, the initiator device may deliver a trigger frame on a different channel to trigger reporting of the measurement result of the previous periodicity. This significantly enhances system robustness. For example, when the measurement result of the previous periodicity fails to be received on a narrowband channel, the initiator device may re-deliver a trigger frame on another channel to trigger reporting of the measurement result of the previous periodicity.

With reference to the fifth aspect, in some implementations of the fifth aspect, the first frame includes at least one of the following information: identifier information of the responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

The first frame may include a plurality of types of information, to help the responder device learn of a transmission status of the first UWB signal for the data measurement, and determine, based on the transmission status of the first UWB signal, whether a data measurement procedure is successfully performed.

With reference to the fifth aspect, in some implementations of the fifth aspect, the sending a first UWB signal on a first UWB channel includes: dividing the first UWB signal into a plurality of first segment signals, where a time length of each first segment signal is less than a first threshold; and sending one first segment signal on the first UWB channel at intervals of the first threshold.

With reference to the fifth aspect, in some implementations of the fifth aspect, the second UWB signal is divided into a plurality of second segment signals, a time length of each second segment signal is less than the first threshold, and the receiving a second UWB signal on the first UWB channel includes: receiving one second segment signal on the first UWB channel within an interval between time for sending two adjacent first segment signals.

A UWB signal is transmitted in segments. This increases instantaneous power of a transmit signal, enlarges signal coverage, and increases a signal-to-noise ratio of a signal received at a receiving end.

With reference to the fifth aspect, in some implementations of the fifth aspect, the third trigger frame includes at least one of the following information: information indicating content included in the third measurement result, information indicating a form of the third measurement result, or information indicating the second periodicity.

Based on the foregoing technical solution, reporting of the measurement result of the previous periodicity may be triggered by using the trigger frame, and the content and the form of the measurement result are further indicated, so that the responder device reports the required measurement result. This improves solution performance.

According to a sixth aspect, a communication method is provided. The method may be performed by a responder device, or may be performed by a component (for example, a chip or a circuit) of a responder device. This is not limited. For ease of description, the following uses an example in which the method is performed by the responder device for description.

The method includes: receiving a first frame on a first narrowband channel, where the first frame is used to trigger data measurement in a first periodicity; receiving a first ultra-wideband UWB signal on a first ultra-wideband UWB channel, and sending a second UWB signal on the first UWB channel, where the first UWB signal and the second UWB signal are used to perform the data measurement to obtain a data measurement result; and receiving a third trigger frame on the first narrowband channel when receiving the first UWB signal, where the third trigger frame is used to trigger reporting of a third measurement result, the third measurement result includes all or a part of a data measurement result in a second periodicity, and the second periodicity is a measurement periodicity before the first periodicity.

With reference to the sixth aspect, in some implementations of the sixth aspect, the method further includes: receiving second indication information, where the second indication information indicates a narrowband channel for sending a trigger frame, the trigger frame includes the third trigger frame, and the narrowband channel includes the first narrowband channel.

With reference to the sixth aspect, in some implementations of the sixth aspect, the method further includes: sending a second frame on the first narrowband channel, where the second frame is used to respond to the first frame.

With reference to the sixth aspect, in some implementations of the sixth aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

With reference to the sixth aspect, in some implementations of the sixth aspect, the method further includes: sending the third measurement result on the first narrowband channel.

With reference to the sixth aspect, in some implementations of the sixth aspect, the third measurement result is the part of the data measurement result in the second periodicity, and the method further includes: receiving a fourth trigger frame on the first narrowband channel, where the fourth trigger frame is used to trigger the responder device to report a fourth measurement result; and sending the fourth measurement result on the first narrowband channel, where the fourth measurement result is all or a part of a measurement result other than the third measurement result in the data measurement result in the second periodicity.

With reference to the sixth aspect, in some implementations of the sixth aspect, the third measurement result is all of the data measurement result in the second periodicity, and the method further includes: receiving a fourth trigger frame on the first narrowband channel, where the fourth trigger frame is used to trigger the responder device to report the third measurement result; and sending the third measurement result on the first narrowband channel.

With reference to the sixth aspect, in some implementations of the sixth aspect, the first frame includes at least one of the following information: identifier information of the responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

With reference to the sixth aspect, in some implementations of the sixth aspect, the sending a second UWB signal on the first UWB channel includes: dividing the second UWB signal into a plurality of second segment signals, where a time length of each second segment signal is less than a first threshold; and sending one second segment signal on the first UWB channel at intervals of the first threshold.

With reference to the sixth aspect, in some implementations of the sixth aspect, the first UWB signal is divided into a plurality of first segment signals, a time length of each first segment signal is less than the first threshold, and the receiving a first UWB signal on a first UWB channel includes: receiving one first segment signal on the first UWB channel within an interval between time for sending two adjacent second segment signals.

With reference to the sixth aspect, in some implementations of the sixth aspect, the third trigger frame includes at least one of the following information: information indicating content included in the third measurement result, information indicating a form of the third measurement result, or information indicating the second periodicity.

For beneficial effect of the method shown in the sixth aspect and the possible designs of the sixth aspect, refer to the beneficial effect in the fifth aspect and the possible designs of the fifth aspect.

According to a seventh aspect, a communication apparatus is provided. The apparatus is configured to perform the method provided in the fifth aspect.

The apparatus includes: a sending unit, configured to send a first frame on a first narrowband channel, where the first frame is used to trigger data measurement in a first periodicity, and the sending unit is further configured to send a first ultra-wideband UWB signal on a first ultra-wideband UWB channel; and a receiving unit, configured to receive a second UWB signal on the first UWB channel, where the first UWB signal and the second UWB signal are used to perform the data measurement to obtain a data measurement result, the sending unit is further configured to send a third trigger frame on the first narrowband channel when sending the first UWB signal, the third trigger frame is used to trigger reporting of a third measurement result, the third measurement result includes all or a part of a data measurement result in a second periodicity, and the second periodicity is a measurement periodicity before the first periodicity.

With reference to the seventh aspect, in some implementations of the seventh aspect, the sending unit is further configured to send second indication information, where the second indication information indicates a narrowband channel for sending a trigger frame, the narrowband channel is used to send the trigger frame, the trigger frame includes the third trigger frame, and the narrowband channel includes the first narrowband channel.

With reference to the seventh aspect, in some implementations of the seventh aspect, the receiving unit is further configured to receive a second frame on the first narrowband channel, and the second frame is used to respond to the first frame.

With reference to the seventh aspect, in some implementations of the seventh aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

With reference to the seventh aspect, in some implementations of the seventh aspect, the receiving unit is further configured to receive the third measurement result on the first narrowband channel.

With reference to the seventh aspect, in some implementations of the seventh aspect, the third measurement result is the part of the data measurement result in the second periodicity; the sending unit is further configured to send a fourth trigger frame on the first narrowband channel, where the fourth trigger frame is used to trigger reporting of a fourth measurement result; and the receiving unit is further configured to receive the fourth measurement result on the first narrowband channel, where the fourth measurement result is all or a part of a measurement result other than the third measurement result in the data measurement result in the second periodicity.

With reference to the seventh aspect, in some implementations of the seventh aspect, the third measurement result is all of the data measurement result in the second periodicity; the sending unit is further configured to send a fourth trigger frame on the first narrowband channel, where the fourth trigger frame is used to trigger reporting of the third measurement result; and the receiving unit is further configured to receive the third measurement result on the first narrowband channel.

With reference to the seventh aspect, in some implementations of the seventh aspect, the first frame includes at least one of the following information: identifier information of a responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

With reference to the seventh aspect, in some implementations of the seventh aspect, the apparatus further includes: a processing unit, configured to divide the first UWB signal into a plurality of first segment signals, where a time length of each first segment signal is less than a first threshold; and that the sending unit sends the first UWB signal on the first UWB channel includes: The sending unit sends one first segment signal on the first UWB channel at intervals of the first threshold.

With reference to the seventh aspect, in some implementations of the seventh aspect, the second UWB signal is divided into a plurality of second segment signals, a time length of each second segment signal is less than the first threshold, and that the receiving unit receives the second UWB signal on the first UWB channel includes: The receiving unit receives one second segment signal on the first UWB channel within an interval between time for the sending unit to send two adjacent first segment signals.

With reference to the seventh aspect, in some implementations of the seventh aspect, the third trigger frame includes at least one of the following information: information indicating content included in the third measurement result, information indicating a form of the third measurement result, or information indicating the second periodicity.

For beneficial effect of the method shown in the seventh aspect and the possible designs of the seventh aspect, refer to the beneficial effect in the fifth aspect and the possible designs of the fifth aspect.

According to an eighth aspect, a communication apparatus is provided. The apparatus is configured to perform the method provided in the sixth aspect.

The apparatus includes: a receiving unit, configured to receive a first frame on a first narrowband channel, where the first frame is used to trigger data measurement in a first periodicity, and the receiving unit is further configured to receive a first ultra-wideband UWB signal on a first ultra-wideband UWB channel; and a sending unit, configured to send a second UWB signal on the first UWB channel, where the first UWB signal and the second UWB signal are used to perform the data measurement to obtain a data measurement result, the receiving unit is further configured to receive a third trigger frame on the first narrowband channel when receiving the first UWB signal, the third trigger frame is used to trigger reporting of a third measurement result, the third measurement result includes all or a part of a data measurement result in a second periodicity, and the second periodicity is a measurement periodicity before the first periodicity.

With reference to the eighth aspect, in some implementations of the eighth aspect, the receiving unit is further configured to receive second indication information, where the second indication information indicates a narrowband channel for sending a trigger frame, the trigger frame includes the third trigger frame, and the narrowband channel includes the first narrowband channel.

With reference to the eighth aspect, in some implementations of the eighth aspect, the sending unit is further configured to send a second frame on the first narrowband channel, and the second frame is used to respond to the first frame.

With reference to the eighth aspect, in some implementations of the eighth aspect, the second frame includes at least one of the following information: information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

With reference to the eighth aspect, in some implementations of the eighth aspect, the sending unit is further configured to send the third measurement result on the first narrowband channel.

With reference to the eighth aspect, in some implementations of the eighth aspect, the third measurement result is the part of the data measurement result in the second periodicity; the receiving unit is further configured to receive a fourth trigger frame on the first narrowband channel, where the fourth trigger frame is used to trigger a responder device to report a fourth measurement result; and the sending unit is further configured to send the fourth measurement result on the first narrowband channel, where the fourth measurement result is all or a part of a measurement result other than the third measurement result in the data measurement result in the second periodicity.

With reference to the eighth aspect, in some implementations of the eighth aspect, the third measurement result is all of the data measurement result in the second periodicity; the receiving unit is further configured to receive a fourth trigger frame on the first narrowband channel, where the fourth trigger frame is used to trigger the responder device to report a third measurement result; and the sending unit is further configured to send the third measurement result on the first narrowband channel.

With reference to the eighth aspect, in some implementations of the eighth aspect, the first frame includes at least one of the following information: identifier information of the responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

With reference to the eighth aspect, in some implementations of the eighth aspect, the apparatus further includes: a processing unit, configured to divide the second UWB signal into a plurality of second segment signals, where a time length of each second segment signal is less than a first threshold; and that the sending unit sends the second UWB signal on the first UWB channel includes: The sending unit sends one second segment signal on the first UWB channel at intervals of the first threshold.

With reference to the eighth aspect, in some implementations of the eighth aspect, the first UWB signal is divided into a plurality of first segment signals, a time length of each first segment signal is less than the first threshold, and the receiving unit receives the first UWB signal on the first UWB channel includes: The receiving unit receives one first segment signal on the first UWB channel within an interval between time for the sending unit to send two adjacent second segment signals.

With reference to the eighth aspect, in some implementations of the eighth aspect, the third trigger frame includes at least one of the following information: information indicating content included in the third measurement result, information indicating a form of the third measurement result, or information indicating the second periodicity.

For beneficial effect of the apparatus shown in the eighth aspect and the possible designs of the eighth aspect, refer to the beneficial effect in the sixth aspect and the possible designs of the sixth aspect.

According to a ninth aspect, a communication apparatus is provided. The apparatus is configured to perform the method provided in the first aspect or the fifth aspect. Specifically, the communication apparatus may include units and/or modules configured to perform the method provided in any one of the foregoing implementations of the first aspect or the fifth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a tenth aspect, a communication apparatus is provided. The apparatus is configured to perform the method provided in the second aspect or the sixth aspect. Specifically, the communication apparatus may include units and/or modules configured to perform the method provided in the second aspect or the sixth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to an eleventh aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable storage medium stores program code to be executed by a device, and the program code is used to perform the method provided in any one of the implementations of the first aspect, the second aspect, the fifth aspect, and the sixth aspect.

According to a thirteenth aspect, a computer program product including instructions is provided. When the computer program product runs on a computer, the computer is enabled to perform the method provided in any one of the implementations of the first aspect, the second aspect, the fifth aspect, and the sixth aspect.

According to a fourteenth aspect, a chip is provided. The chip includes a processor and a communication interface. The processor reads, through the communication interface, instructions stored in a memory, to perform the method provided in any one of the implementations of the first aspect, the second aspect, the fifth aspect, and the sixth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations of the first aspect, the second aspect, the fifth aspect, and the sixth aspect.

According to a fifteenth aspect, a communication system is provided, and includes the communication apparatus according to the third aspect and the communication apparatus according to the fourth aspect, or includes the communication apparatus according to the seventh aspect and the communication apparatus according to the eighth aspect.

An embodiment of this application further provides a communication method. In a narrowband protocol-assisted UWB measurement data scenario, after a transmitting end device delivers a first frame that triggers data measurement to trigger a current round of measurement, a responder device reports a measurement report of a previous round by responding to a second frame of the first frame. This effectively simplifies a narrowband interaction procedure and reduces air interface transmission time.

According to a sixteenth aspect, a communication method is provided. The method may be performed by an initiator device, or may be performed by a component (for example, a chip or a circuit) of an initiator device. This is not limited. For ease of description, an example in which the method is performed by the initiator device is used for description below.

The method includes: sending a first frame on a first narrowband channel, where the first frame is used to trigger data measurement in a third periodicity and trigger feedback of a data measurement result in a fourth periodicity; and receiving a second frame on the first narrowband channel, where the second frame is used to respond to the first frame, the second frame includes a fifth measurement result, the fifth measurement result includes all or a part of the data measurement result in the fourth periodicity, and the fourth periodicity is a measurement periodicity before the third periodicity.

Based on the foregoing technical solution, delayed feedback of a measurement report is supported. After the transmitting end device delivers the first frame that triggers the data measurement to trigger a current round of measurement, a responder device reports a measurement report of a previous round by responding to the second frame of the first frame. This effectively simplifies a narrowband interaction procedure and reduces air interface transmission time.

With reference to the sixteenth aspect, in some implementations of the sixteenth aspect, the method further includes: failing to obtain the fifth measurement result from the second frame; and re-sending the first frame on the first narrowband channel, and re-receiving, on the first narrowband channel, the second frame responding to the first frame, where the second frame includes the fifth measurement result.

Based on the foregoing technical solution, an interaction procedure between the first frame and the second frame may be repeated for a plurality of times, to cope with a case in which the fifth measurement result fails to be obtained.

With reference to the sixteenth aspect, in some implementations of the sixteenth aspect, when the fifth measurement result includes a first part of the data measurement result in the fourth periodicity, the method further includes: re-sending the first frame on the first narrowband channel, and re-receiving, on the first narrowband channel, a third frame responding to the first frame, where the third frame includes a sixth measurement result, and the sixth measurement result includes a second part of the data measurement result in the fourth periodicity.

Based on the foregoing technical solution, the data measurement result in the fourth periodicity may be transmitted in segments, and a part of content of the measurement result is triggered to be obtained each time.

With reference to the sixteenth aspect, in some implementations of the sixteenth aspect, the method further includes: sending a first ultra-wideband UWB signal on a first ultra-wideband UWB channel, and receiving a second UWB signal on the first UWB channel, where the first UWB signal and the second UWB signal are used to perform the data measurement to obtain a data measurement result in the third periodicity.

According to a seventeenth aspect, a communication method is provided. The method may be performed by a responder device, or may be performed by a component (for example, a chip or a circuit) of a responder device. This is not limited. For ease of description, the following uses an example in which the method is performed by the responder device for description.

The method includes: receiving a first frame on a first narrowband channel, where the first frame is used to trigger data measurement in a third periodicity and trigger feedback of a data measurement result in a fourth periodicity; and sending a second frame on the first narrowband channel, where the second frame is used to respond to the first frame, the second frame includes a fifth measurement result, the fifth measurement result includes all or a part of the data measurement result in the fourth periodicity, and the fourth periodicity is a measurement periodicity before the third periodicity.

With reference to the seventeenth aspect, in some implementations of the seventeenth aspect, when the fifth measurement result fails to be transmitted, the method further includes: re-receiving the first frame on the first narrowband channel, and re-sending, on the first narrowband channel, the second frame responding to the first frame, where the second frame includes the fifth measurement result.

With reference to the seventeenth aspect, in some implementations of the seventeenth aspect, if the fifth measurement result includes a first part of the data measurement result in the fourth periodicity, the method further includes: re-receiving the first frame on the first narrowband channel, and re-sending, on the first narrowband channel, a third frame responding to the first frame, where the third frame includes a sixth measurement result, and the sixth measurement result includes a second part of the data measurement result in the fourth periodicity.

With reference to the seventeenth aspect, in some implementations of the seventeenth aspect, the method further includes: receiving a first ultra-wideband UWB signal on a first ultra-wideband UWB channel, and sending a second UWB signal on the first UWB channel, where the first UWB signal and the second UWB signal are used to perform the data measurement to obtain a data measurement result in the third periodicity.

For beneficial effect of the method shown in the seventeenth aspect and the possible designs of the seventeenth aspect, refer to the beneficial effect in the sixteenth aspect and the possible designs of the sixteenth aspect.

According to an eighteenth aspect, a communication apparatus is provided. The apparatus is configured to perform the method provided in the sixteenth aspect.

The apparatus includes: a sending unit, configured to send a first frame on a first narrowband channel, where the first frame is used to trigger data measurement in a third periodicity and trigger feedback of a data measurement result in a fourth periodicity; and a receiving unit, configured to receive a second frame on the first narrowband channel, where the second frame is used to respond to the first frame, the second frame includes a fifth measurement result, the fifth measurement result includes all or a part of the data measurement result in the fourth periodicity, and the fourth periodicity is a measurement periodicity before the third periodicity.

With reference to the eighteenth aspect, in some implementations of the eighteenth aspect, the apparatus further includes: a processing unit, configured to determine that obtaining the fifth measurement result from the second frame fails. The sending unit is further configured to re-send the first frame on the first narrowband channel, and the receiving unit is further configured to re-receive, on the first narrowband channel, the second frame responding to the first frame, where the second frame includes the fifth measurement result.

With reference to the eighteenth aspect, in some implementations of the eighteenth aspect, if the fifth measurement result includes a first part of the data measurement result in the fourth periodicity, the sending unit is further configured to re-send the first frame on the first narrowband channel, and the receiving unit is further configured to re-receive, on the first narrowband channel, a third frame responding to the first frame, where the third frame includes a sixth measurement result, and the sixth measurement result includes a second part of the data measurement result in the fourth periodicity.

With reference to the eighteenth aspect, in some implementations of the eighteenth aspect, the sending unit is further configured to send a first ultra-wideband UWB signal on a first ultra-wideband UWB channel, and the receiving unit is further configured to receive a second UWB signal on the first UWB channel, where the first UWB signal and the second UWB signal are used to perform the data measurement to obtain a data measurement result in the third periodicity.

According to a nineteenth aspect, a communication apparatus is provided. The apparatus is configured to perform the method provided in the seventeenth aspect.

The apparatus includes: a receiving unit, configured to receive a first frame on a first narrowband channel, where the first frame is used to trigger data measurement in a third periodicity and trigger feedback of a data measurement result in a fourth periodicity; and a sending unit, configured to send a second frame on the first narrowband channel, where the second frame is used to respond to the first frame, the second frame includes a fifth measurement result, the fifth measurement result includes all or a part of the data measurement result in the fourth periodicity, and the fourth periodicity is a measurement periodicity before the third periodicity.

With reference to the nineteenth aspect, in some implementations of the nineteenth aspect, when the fifth measurement result fails to be transmitted, the receiving unit is further configured to re-receive the first frame on the first narrowband channel; and the sending unit is configured to re-send, on the first narrowband channel, the second frame responding to the first frame, where the second frame includes the fifth measurement result.

With reference to the nineteenth aspect, in some implementations of the nineteenth aspect, if the fifth measurement result includes a first part of the data measurement result in the fourth periodicity, the receiving unit is further configured to re-receive the first frame on the first narrowband channel, and re-send, on the first narrowband channel, a third frame responding to the first frame, where the third frame includes a sixth measurement result, and the sixth measurement result includes a second part of the data measurement result in the fourth periodicity.

With reference to the nineteenth aspect, in some implementations of the nineteenth aspect, the receiving unit is further configured to receive a first ultra-wideband UWB signal on a first ultra-wideband UWB channel; and the sending unit is configured to send a second UWB signal on the first UWB channel, where the first UWB signal and the second UWB signal are used to perform the data measurement to obtain a data measurement result in the third periodicity.

For beneficial effect of the apparatus shown in the nineteenth aspect and the possible designs of the nineteenth aspect, refer to the beneficial effect in the eighteenth aspect and the possible designs of the eighteenth aspect.

According to a twentieth aspect, a communication apparatus is provided. The apparatus is configured to perform the method provided in the sixteenth aspect. Specifically, the communication apparatus may include a unit and/or a module configured to perform the method provided in any one of the foregoing implementations of the sixteenth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a twenty-first aspect, a communication apparatus is provided. The apparatus is configured to perform the method provided in the seventeenth aspect. Specifically, the communication apparatus may include a unit and/or a module configured to perform the method provided in the seventeenth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a twenty-second aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twenty-third aspect, a computer-readable storage medium is provided. The computer-readable storage medium stores program code to be executed by a device, and the program code is used to perform the method provided in any one of the implementations of the sixteenth aspect or the seventeenth aspect.

According to a twenty-fourth aspect, a computer program product including instructions is provided. When the computer program product runs on a computer, the computer is enabled to perform the method provided in any one of the implementations of the sixteenth aspect or the seventeenth aspect.

According to a twenty-fifth aspect, a chip is provided. The chip includes a processor and a communication interface. The processor reads, through the communication interface, instructions stored in a memory, to perform the method provided in any one of the implementations of the sixteenth aspect or the seventeenth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations of the sixteenth aspect or the seventeenth aspect.

According to a twenty-sixth aspect, a communication system is provided, and includes the communication apparatus according to the eighteenth aspect and the communication apparatus according to the nineteenth aspect.

An embodiment of this application further provides a communication method. In a narrowband protocol-assisted UWB measurement data scenario, parameter setting in a measurement procedure is negotiated.

According to a twenty-seventh aspect, a communication method is provided. The method may be performed by an initiator device, or may be performed by a component (for example, a chip or a circuit) of an initiator device. This is not limited. For ease of description, an example in which the method is performed by the initiator device is used for description below.

The method includes: sending a fourth frame on a first narrowband channel, where the fourth frame indicates a parameter in a negotiation measurement procedure, and the fourth frame includes a parameter supported by the initiator device; and receiving a fifth frame on the first narrowband channel, where the fifth frame is used to respond to the fourth frame, and the fifth frame includes a parameter supported by a responder device and the initiator device.

Based on the foregoing technical solution, in a narrowband protocol-assisted UWB measurement data scenario, the parameter in the measurement procedure may be negotiated by using the fourth frame and the fifth frame through handshake.

With reference to the twenty-seventh aspect, in some implementations of the twenty-seventh aspect, the method further includes: sending a sixth frame on the first narrowband channel after receiving the fifth frame, where the sixth frame indicates to start measurement after first duration after the sixth frame.

With reference to the twenty-seventh aspect, in some implementations of the twenty-seventh aspect, the parameter in the measurement procedure includes at least one of the following: initial channel information, UWB measurement channel information, or physical layer rate information.

According to a twenty-eighth aspect, a communication method is provided. The method may be performed by a responder device, or may be performed by a component (for example, a chip or a circuit) of a responder device. This is not limited. For ease of description, the following uses an example in which the method is performed by the responder device for description.

The method includes: receiving a fourth frame on a first narrowband channel, where the fourth frame indicates a parameter in a negotiation measurement procedure, and the fourth frame includes a parameter supported by an initiator device; and sending a fifth frame on the first narrowband channel, where the fifth frame is used to respond to the fourth frame, and the fifth frame includes a parameter supported by the responder device and the initiator device.

With reference to the twenty-eighth aspect, in some implementations of the twenty-eighth aspect, the method further includes: receiving a sixth frame on the first narrowband channel after sending the fifth frame, where the sixth frame indicates to start measurement after first duration after the sixth frame.

With reference to the twenty-eighth aspect, in some implementations of the twenty-eighth aspect, the parameter in the measurement procedure includes at least one of the following: initial channel information, UWB measurement channel information, or physical layer rate information.

According to a twenty-ninth aspect, a communication apparatus is provided. The apparatus is configured to perform the method provided in the twenty-seventh aspect. Specifically, the communication apparatus may include a unit and/or a module configured to perform the method provided in any one of the foregoing implementations of the twenty-seventh aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a thirtieth aspect, a communication apparatus is provided. The apparatus is configured to perform the method provided in the twenty-eighth aspect. Specifically, the communication apparatus may include a unit and/or a module configured to perform the method provided in the twenty-eighth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a thirty-first aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a thirty-second aspect, a computer-readable storage medium is provided. The computer-readable storage medium stores program code to be executed by a device, and the program code is used to perform the method provided in any one of the implementations of the twenty-seventh aspect or the twenty-eighth aspect.

According to a thirty-third aspect, a computer program product including instructions is provided. When the computer program product runs on a computer, the computer is enabled to perform the method provided in any one of the implementations of the twenty-seventh aspect or the twenty-eighth aspect.

According to a thirty-fourth aspect, a chip is provided. The chip includes a processor and a communication interface. The processor reads, through the communication interface, instructions stored in a memory, to perform the method provided in any one of the implementations of the twenty-seventh aspect or the twenty-eighth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations of the twenty-seventh aspect or the twenty-eighth aspect.

According to a thirty-fifth aspect, a communication system is provided, and includes the communication apparatus according to the twenty-ninth aspect and the communication apparatus according to the thirtieth aspect.

## BRIEF DESCRIPTION OF DRAWINGS

FIG. 1 is a diagram of two application scenarios according to this application;
(a) in FIG. 2 is a diagram of a UWB signal according to an embodiment of this application;

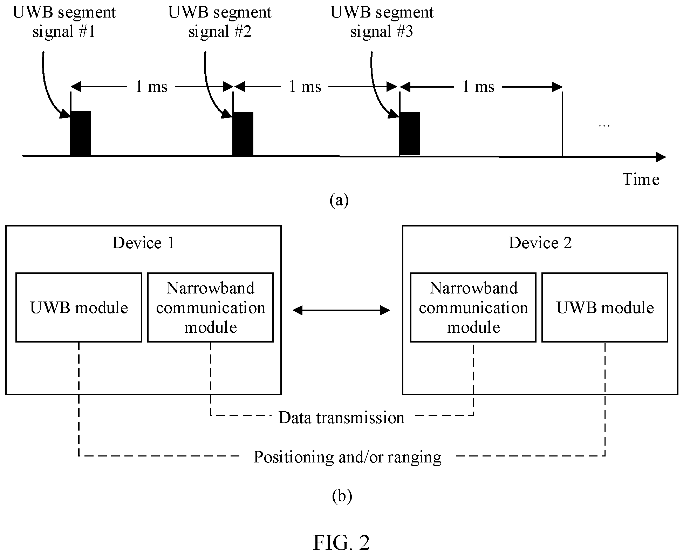

(b) in FIG. 2 is a diagram of an architecture of a ranging/positioning system according to an embodiment of this application;

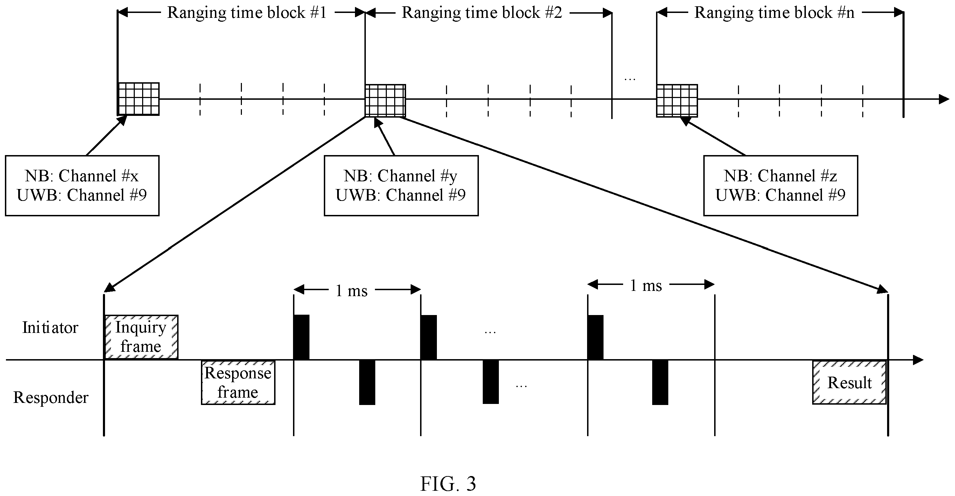

FIG. 3 is a diagram of a UWB ranging method according to an embodiment of this application;

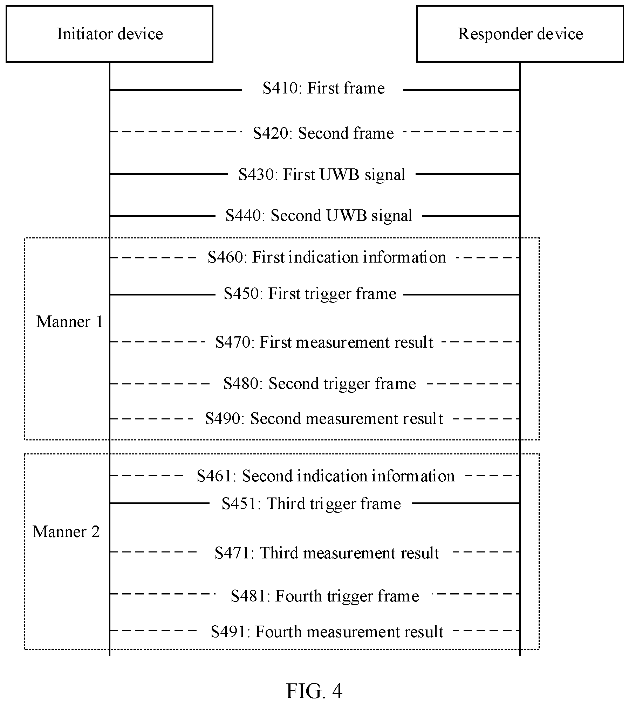

FIG. 4 is a schematic flowchart of a communication method according to an embodiment of this application;

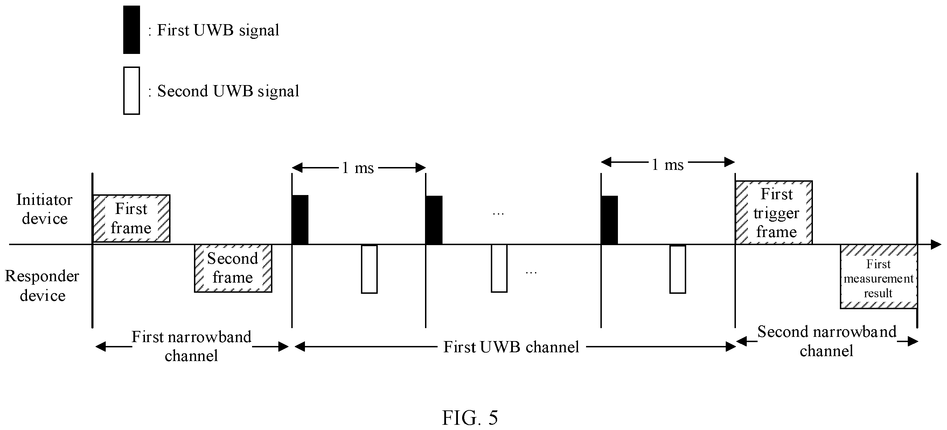

FIG. 5 is a diagram of a sending time sequence corresponding to a first trigger frame according to an embodiment of this application;

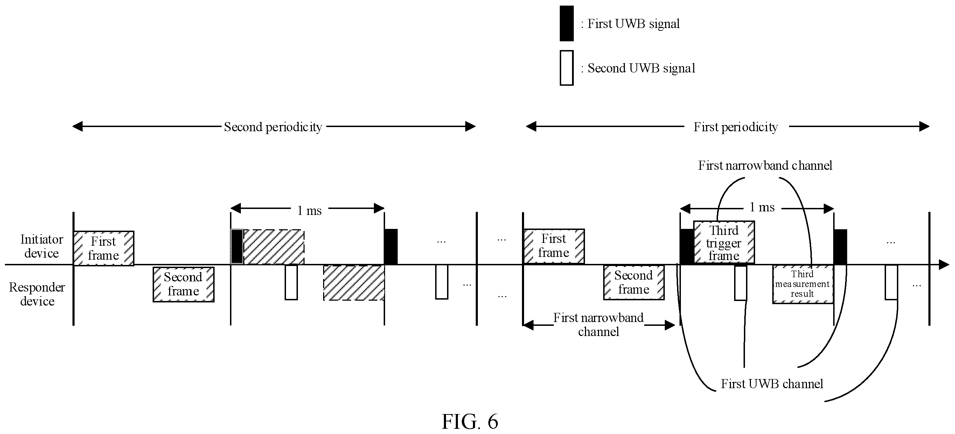

FIG. 6 is a diagram of a sending time sequence corresponding to a third trigger frame according to an embodiment of this application;

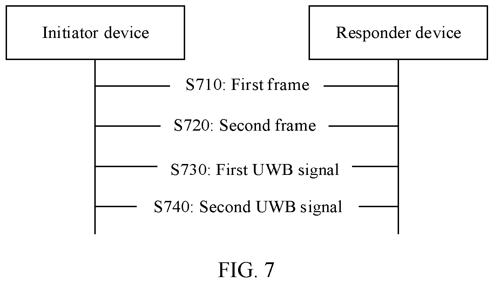

FIG. 7 is a schematic flowchart of another communication method according to an embodiment of this application;

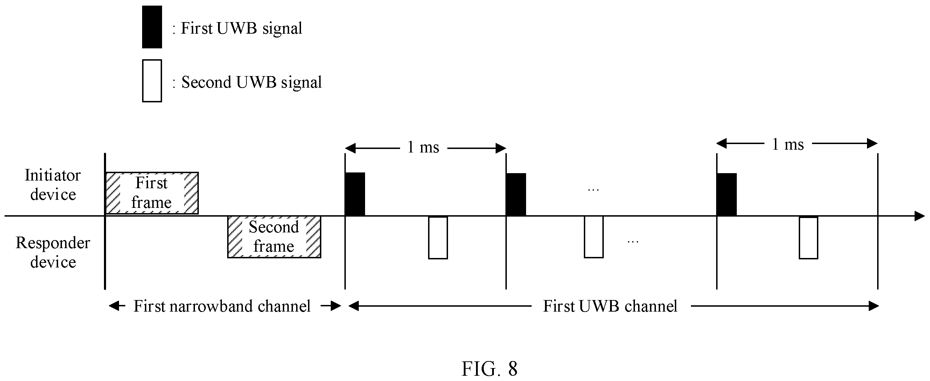

FIG. 8 is a diagram of a frame sending time sequence according to an embodiment of this application;

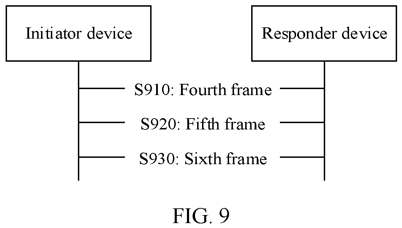

FIG. 9 is a schematic flowchart of still another communication method according to an embodiment of this application;

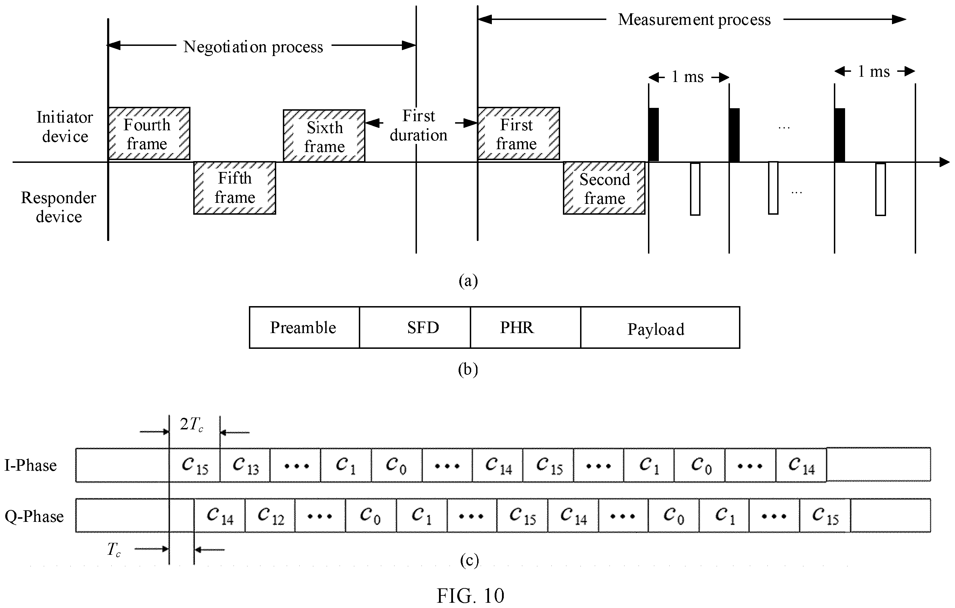

(a) in FIG. 10 is a diagram of a frame sending time sequence according to an embodiment of this application;

(b) in FIG. 10 is a diagram of a PPDU according to an embodiment of this application;

(c) in FIG. 10 is a diagram of symbol-to-chip mapping according to an embodiment of this application;

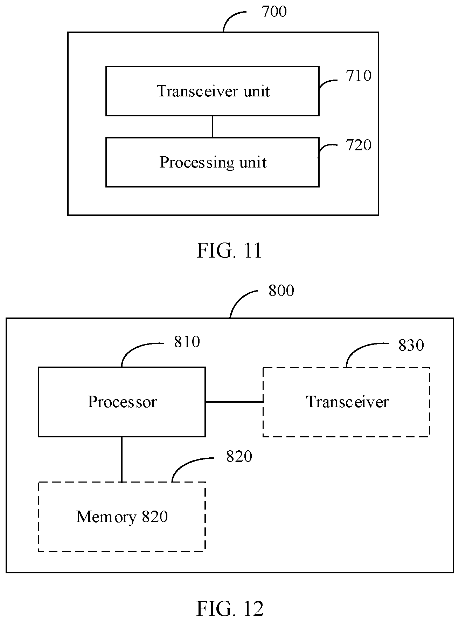

FIG. 11 is a block diagram of a communication apparatus according to an embodiment of this application; and

FIG. 12 is a block diagram of a communication device according to an embodiment of this application.

## DESCRIPTION OF EMBODIMENTS

The following describes technical solutions of this application with reference to accompanying drawings.

Embodiments of this application are applicable to an ultra-wideband (Ultra-Wideband, UWB) technology-based wireless personal area network (wireless personal area network, WPAN). Currently, a standard for the WPAN is the institute of electrical and electronics engineers (institute of electrical and electronics engineers, IEEE) 802.15 series. The WPAN may be for communication between digital auxiliary devices in a small range, such as a telephone, a computer, and an auxiliary device, and an operating range of the WPAN is usually within 10 m. Technologies supporting the wireless personal area network include Bluetooth (Bluetooth), ZigBee (ZigBee), ultra-wideband, an IrDA infrared (infrared) connection technology, HomeRF, and the like. A person skilled in the art easily understands that, various aspects in this application may be extended to another network using various standards or protocols, for example, a wireless local area network (Wireless Local Area Network, WLAN), high performance radio LAN (High Performance Radio LAN, HIPERLAN) (a wireless standard similar to the IEEE 802.11 standard, mainly used in Europe), a wide area network (WAN), or another network that is currently known or developed in the future. From a perspective of network composition, the WPAN is located at a bottom layer of an entire network architecture and is for a wireless connection between devices in a small range, that is, a point-to-point short-range connection, and may be considered as a short-range wireless communication network. Based on different application scenarios, WPANs are further classified into a high rate (high rate, HR)-WPAN and a low rate (low rate)-WPAN. The HR-WPAN may be used to support various high-rate multimedia applications, including high-quality sound image delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. The FFD devices can communicate with each other, and the FFD device and the RFD device can communicate with each other. The RFD devices cannot directly communicate with each other, and can only communicate with the FFD devices, or forward data externally through one FFD device. The FFD device associated with the RFD is referred to as a coordinator (coordinator) of the RFD. The RFD device is mainly for a simple control application, like a light switch and a passive infrared sensor. A small amount of data is transmitted, and a small quantity of transmission resources and communication resources are occupied. Therefore, costs of the RFD device are low. The coordinator may also be referred to as a personal area network (personal area network, PAN) coordinator, a central control node, or the like. The PAN coordinator is a main control node of an entire network, and each ad hoc network can have only one PAN coordinator which has a member identity management, link information management, and packet forwarding function. Optionally, the device in embodiments of this application may be a device that supports a plurality of WPAN standards, such as 802.15.4a, 802.15.4z, and a currently discussed version or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that can invoke and execute a program in the FFD or the RFD.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

Alternatively, embodiments of this application are applicable to a wireless local area network system, like an internet of things (internet of things, IoT) network or a vehicle-to-everything (Vehicle to X, V2X). Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for descriptions, and the communication systems applicable to this application are not limited thereto. This is uniformly described herein, and details are not described below again.

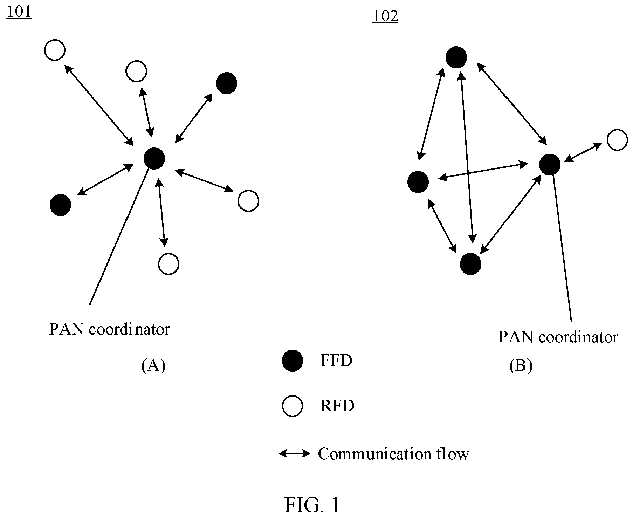

FIG. 1 is a diagram of two application scenarios according to this application. In a system 101 shown in (A) in FIG. 1, a plurality of FFD devices and a plurality of RFD devices form a communication system with a star topology (star topology), where one FFD is a PAN controller. In the communication system with the star topology, the PAN controller performs data transmission with one or more other devices, in other words, a one-to-many or many-to-one data transmission architecture may be established between a plurality of devices. In a system 102 shown in (B) in FIG. 1, a plurality of FFD devices and one RFD device form a communication system with a peer-to-peer topology (peer-to-peer topology), where one FFD is a PAN controller. In the communication system with the peer-to-peer topology, a many-to-many data transmission architecture may be established between a plurality of different devices.

It should be understood that (A) in FIG. 1 and (B) in FIG. 1 are merely simplified diagrams for ease of understanding, and do not constitute a limitation on an application scenario of this application. For example, the system 101 and/or the system 102 may further include another FFD and/or another RFD.

For ease of understanding of the technical solutions in embodiments of this application, some terms or concepts that may be used in embodiments of this application are first briefly described.

1. UWB technology: The UWB technology is a wireless carrier communication technology in which nanosecond-level non-sinusoidal narrow impulses are used for data transmission, and a wide spectral range is occupied. Because of a very narrow impulse and very low radiation spectral density of a UWB system, the UWB system has advantages of strong multi-path resolution, low power consumption, high confidentiality, and the like, and is conducive to coexistence with another system, thereby improving spectral utilization and system capacity.

As the Federal Communications Commission (Federal Communications Commission, FCC) approved entry of the UWB technology into the civil field in 2002, ultra-wideband wireless communication has become one of the popular physical layer technologies for short-range and high-speed wireless networks. Many world-renowned companies, research institutes, and standardization organizations are actively engaged in the research, development, and standardization of ultra-wideband wireless communication technologies. The Institute of Electrical and Electronics Engineers (Institute of Electrical and Electronic Engineers, IEEE) has incorporated the UWB technology into its IEEE 802 series wireless standards, and has released a UWB technology-based WPAN standard IEEE 802.15.4a and an evolved version IEEE 802.15.4z. Currently, a next-generation UWB technology-based WPAN standard 802.15.4ab has been put on the agenda.

Because the UWB technology performs data transmission through receiving and sending of extremely narrow impulses at a nanosecond-level or sub-nanosecond-level rather than using a carrier in a conventional communication system, the UWB technology has a high requirement on time synchronization of a transceiver device. In addition, due to a large communication bandwidth of the UWB technology, the devices have high power consumption and complexity when signals are received and sent on an ultra-wideband channel, and most UWB communication devices are driven by a battery. It is expected to further reduce power consumption of the UWB system in a next generation standard. Therefore, all signals except ranging and sensing reference signals are received and sent in a narrowband system in a narrowband signal-assisted manner. This reduces overall power consumption overheads.

2. Power of a UWB signal: Due to a large bandwidth of an ultra-wideband system, during operating, to reduce interference to another narrowband device, an FCC imposes strict restrictions on power spectral density of UWB signals. According to the Code of Federal Regulations (Code of Federal Regulations, CFR), there are the following two rules.

Rule 1: An average value of maximum power spectral density (Power Spectral Density, PSD) of the transmitted UWB signals in one millisecond cannot be greater than 41.3 dBm per megahertz.

Rule 2: Maximum power of the transmitted UWB signals in any 50 MHz bandwidth cannot exceed 1 milliwatt.

Rule 1 is used to limit total energy transmitted by a UWB in one millisecond (for example, 37 nJ in a 500 MHz bandwidth). The energy is intensively transmitted in shorter time. This increases instantaneous power of a transmit signal, enlarges signal coverage, and increases a signal-to-noise ratio of a signal received at a receiving end. Based on this, in some scenarios in which transmit power needs to be increased, a transmitting end divides a to-be-transmitted UWB signal into a plurality of segment signals, where a time length of each segment signal is less than one millisecond; and then sends only one segment signal in each millisecond.

For ease of understanding, a UWB signal is briefly described with reference to (a) in FIG. 2. (a) in FIG. 2 is a diagram of the UWB signal according to an embodiment of this application.

It can be seen from (a) in FIG. 2 that, a transmitting end divides the to-be-transmitted UWB signal into a plurality of segment signals (a UWB segment signal #1, a UWB segment signal #2, and a UWB segment signal #3 shown in (a) in FIG. 2), a time length of each segment signal is less than one millisecond, and only one segment signal is sent in each millisecond. The segment signal may be referred to as a segment for short.

It can be learned from the foregoing that, the to-be-transmitted UWB signal is divided into the plurality of segment signals for segment transmission. This can increase instantaneous power of the UWB signal, but cannot increase the UWB signal infinitely. Rule 2 is actually used to limit a power increase multiple of UWB segment transmission.

3. Impulse ultra-wideband (Impulse Radio Ultra-Wideband, IR-UWB) system: Due to a large bandwidth of an ultra-wideband system, a device of the ultra-wideband system needs to have an ultra-high-speed data receiving and sending capability. However, spectral efficiency of the IR-UWB system based on impulse transmission is low, and when same information is transmitted, power consumption overheads for an IR-UWB solution are much higher than those for another narrowband short-range protocol (for example, Bluetooth or ZigBee).

4. Ranging or sensing: In a ranging or sensing scenario, precision of a measurement or sensing result is related to a signal bandwidth. A larger signal bandwidth indicates higher precision of a result obtained through sensing or ranging. Therefore, it may be considered that a reference signal for ranging or sensing is received and sent by using a UWB system, and another reference signal and/or data is transmitted according to a narrowband protocol. This can ensure ranging and sensing precision, and also reduce power consumption. Sensing in this application may be understood as a bottom-layer sensing technology in an internet of things technology architecture, and is a primary step for obtaining information and implementing object control in internet of things. Ranging may be understood as measurement of a distance between devices, including but not limited to measurement of a distance between two objects in internet of things.

For ease of understanding, with reference to (b) in FIG. 2, a ranging/positioning system to which the foregoing ranging technology is applied is briefly described. (b) in FIG. 2 is a diagram of an architecture of the ranging/positioning system according to an embodiment of this application. As shown in (b) in FIG. 2, the ranging/positioning system includes a plurality of devices (for example, a device 1 and a device 2 in (b) in FIG. 2), and may be an apparatus in this embodiment of this application. Each device includes at least a UWB module and a narrowband communication module. Positioning and/or ranging may be performed between the UWB modules in the device 1 and the device 2, and data transmission may be performed between the narrowband communication modules in the device 1 and the device 2 through a radio link.

In this application, the UWB module may be understood as an apparatus, a chip, a system, or the like that implements a UWB wireless communication technology. Correspondingly, the narrowband communication module may be understood as an apparatus, a chip, a system, or the like that implements a narrowband communication technology (such as Wi-Fi, Bluetooth, or Zigbee (a ZigBee protocol)). In one device (device), a UWB module and a narrowband communication module may be different apparatuses or chips. Certainly, the UWB module and the narrowband communication module may alternatively be integrated into one apparatus or chip. Implementations of the UWB module and the narrowband communication module in the device are not limited in embodiments of this application. The UWB technology can enable a communication apparatus to have a high data throughput and enable apparatus positioning to have high precision.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user devices (user equipment, UE) of various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium. In addition, the device supports 802.15.4ab or a next-generation standard of 802.15.4ab. The device further supports a plurality of standards, such as 802.15.4a, 802.15.4-2011, 802.15.4-2015, and 802.15.4z. The device may alternatively support a plurality of wireless local area network (wireless local area network, WLAN) standards of the 802.11 family such as 802.11ax, 802.11ac, 802.11n, 802.11g, 802.11b, 802.11a, and a next generation of 802.11be.

For ease of understanding, with reference to FIG. 3, the following briefly describes a narrowband protocol-assisted UWB ranging method. FIG. 3 is a diagram of the UWB ranging method according to an embodiment of this application.

It can be seen from FIG. 3 that, a transceiver device completes round-trip measurement by using UWB signals, to implement high-precision ranging, and completes negotiation of a ranging task and feedback of a ranging result according to a narrowband protocol. A specific procedure includes the following steps.

The devices perform narrowband-assisted UWB ranging once in each ranging time block (ranging block) (a ranging time block #1, a ranging time block #2, and a ranging time block #n shown in FIG. 3) (or referred to as a measurement periodicity). In each ranging time block (for example, the ranging time block #2 shown in FIG. 3), narrowband systems operate on a same channel (for example, a channel #y shown in FIG. 3). In different ranging time blocks, the narrowband system may change an operating channel (for example, a channel #x corresponding to the ranging time block #1, the channel #y corresponding to the ranging time block #2, and a channel #z corresponding to the ranging time block #n shown in FIG. 3) in a frequency hopping manner. This avoids a complex channel access solution.

Specifically, in each ranging procedure, an initiator (initiator) sends an inquiry (poll) frame to a responder (responder), and the responder replies with a response (resp) frame after receiving the inquiry frame. After receiving the response frame, the initiator performs round-trip time measurement with the responder on a UWB channel in a segment transmission manner. After the measurement is completed, the responder sends a measurement result (report) to the initiator by using the narrowband system.

The foregoing describes, with reference to FIG. 1, the scenario to which embodiments of this application are applied, further briefly describes basic concepts in this application, and briefly describes the UWB ranging method with reference to FIG. 3. The method has the following disadvantages.

1. The narrowband systems in each ranging time block remain on a same channel, but total time occupied by a ranging procedure of a UWB signal may reach dozens of milliseconds. In this time period, because no signal is received or sent in the narrowband system, the narrowband channel may be used by another device. Consequently, a responder device loses a transmission opportunity on the narrowband channel, and cannot feed back a measurement result to the initiator in time.

2. Because an interval between time for feeding back a measurement result on the narrowband channel and time for last interaction on the narrowband channel is long, if a problem occurs in UWB signal transmission of the initiator (for example, strong interference occurs) during this period, the responder does not know how to make response, and the initiator may not know a progress status. In addition, in the method, reserving adequate time for the responder to prepare the measurement report is not taken into account.

To resolve problems in the foregoing UWB ranging method, this application provides a communication method. Reporting of a measurement result is triggered by using a trigger frame, to avoid a measurement result reporting failure. The following describes in detail the communication method provided in this application with reference to the accompanying drawings.

A specific structure of an execution body of the method provided in embodiments of this application is not particularly limited in the following embodiments, provided that communication can be performed according to the method provided in embodiments of this application by running a program that records code of the method provided in embodiments of this application. For example, the method provided in embodiments of this application may be performed by a transceiver device, or a functional module that is in a transceiver device and that can invoke and execute the program.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.

Second, various numeric numbers such as first and second (for example, "#1" and "#2") shown in this application are merely for ease of description, and are used to distinguish between objects, but are not intended to limit the scope of embodiments of this application, for example, the terms are used to differentiate between different channels, but are not for describing a particular order or sequence. It should be understood that the objects described in such a way are interchangeable in an appropriate circumstance, so that a solution other than embodiments of this application can be described.

Third, in this application, "preset" may include "predefined", for example, defined in a protocol. "Predefined" may be implemented in a manner of prestoring corresponding code, a table, or other related information that may be used for indication in a device (for example, including network elements). A specific implementation is not limited in this application.

Fourth, "save" in embodiments of this application may mean that saved in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

Sixth, a "protocol" in embodiments of this application may be a standard protocol in the communication field, for example, may include a Wi-Fi protocol, and a related protocol applied to a future communication system. This is not limited in this application.

Without loss of generality, the following describes in detail the communication method provided in embodiments of this application by using interaction between an initiator device and a responder device as an example.

By way of example, and not limitation, the initiator device may be a device having a communication capability in a WPAN, for example, an FFD or an RFD. Similarly, the responder device may also be a device having a communication capability in a WPAN, for example, an FFD or an RFD.

It should be understood that specific types of the initiator device and the responder device are not limited in this application, provided that both are communication devices having a UWB signal receiving and sending capability.

FIG. 4 is a schematic flowchart of a communication method according to an embodiment of this application. The method includes the following steps.

S410: An initiator device sends a first frame to a responder device, or a responder device receives a first frame from an initiator device.

Specifically, the initiator device sends the first frame to the responder device on a first narrowband channel. The first frame is used to trigger data measurement. It may be understood that, when the data measurement needs to be performed between the initiator device and the responder device, a data measurement procedure may be triggered by using the first frame.

For example, the first frame may be referred to as an inquiry frame, a polling frame, a poll (poll) frame, or the like. It should be understood that a name of a frame or information is not limited in this embodiment of this application.

Optionally, the first frame includes but is not limited to at least one of the following information:
identifier information of the responder device, information indicating duration of a first UWB signal in each millisecond, information indicating a sequence used by the first UWB signal, information indicating a quantity of segments of the first UWB signal, information indicating a total length of the first UWB signal, and information indicating a feedback type of a data measurement result. The first UWB signal is a UWB signal that is to be sent by the initiator device and that is for measurement.

The identifier information of the responder device identifies the responder device, and includes but is not limited to:
information that can identify the responder device, such as an identifier (identifier, ID) of the responder device, attribute information of the responder device, or identifier information of a device group to which the responder device belongs.

The duration of the first UWB signal in each millisecond indicates a time length of each segment signal when the to-be-sent first UWB signal is divided into a plurality of segment signals. For example, generally, the initiator device divides a to-be-transmitted UWB signal into a plurality of segment signals, where a time length of each segment signal is less than one millisecond, and then sends only one segment signal in each millisecond.

The sequence used by the first UWB signal indicates the initiator device to generate, based on a sequence, the to-be-sent first UWB signal, and the sequence includes but is not limited to:

a maximum length sequence, where a sequence length is 2^m-1, and because a sequence obtained after cyclic shift is performed on the M sequence is still an M sequence, and the M sequence obtained after the cyclic shift is performed has very low correlation (almost orthogonal) with the original sequence, different devices may use M sequences formed by cyclically shifting the M sequence by different bits, so that UWB signals sent by the different devices are almost orthogonal, thereby reducing interference between the UWB signals;

a row or column of a Hadamard matrix, where the Hadamard matrix is a matrix formed by only elements 1 and -1, all rows of the Hadamard matrix are orthogonal to each other, all columns are also orthogonal to each other, different UWB devices may use different rows or columns of the Hadamard matrix, and UWB signals sent by the different devices may be orthogonal to each other, thereby reducing interference between the UWB signals; and

a gold sequence, where the gold sequence is obtained by multiplying elements corresponding to elements in two maximum length sequences of a same length, and has a similar property to the maximum length sequence.

It should be noted that, in this embodiment of this application, that the initiator device generates the to-be-sent first UWB signal based on a sequence is not limited. For details, refer to generation of a current UWB signal.

The quantity of segments of the first UWB signal indicates a quantity of segment signals when the to-be-sent first UWB signal is divided into a plurality of segment signals.

The total length of the first UWB signal indicates a time length of the to-be-sent first UWB signal.

The feedback type of the measurement result indicates a form in which the initiator device expects to feed back the received measurement result, and the feedback type of the measurement result includes but is not limited to:

a channel impulse response (channel impulse response, CIR), namely, amplitudes and phase information of different multipath signals;

a differential CIR, namely, a difference between a channel impulse response and a last measurement result; or

a channel measurement result, namely, an incident angle, a delay, and corresponding signal strength and phase information of each multipath signal.

In a possible implementation, the communication method provided in this embodiment of this application is applied to a narrowband protocol-assisted UWB ranging scenario. Measurement data may be a measurement distance, and the first UWB signal may be a UWB ranging signal.

In another possible implementation, the communication method provided in this embodiment of this application is applied to a narrowband protocol-assisted UWB sensing scenario. Measurement data may be sensing data, and the first UWB signal may be a UWB sensing signal.

It should be noted that the foregoing describes, by using examples, only scenarios to which the communication method provided in this application can be applied, and does not constitute any limitation on the protection scope of this application. The communication method provided in this application is further applied to another scenario, for example, a UWB measurement scenario in which measurement precision is related to a signal bandwidth.

Further, after receiving the first frame, the responder device may feed back a second frame to the initiator device in response to the first frame. A method procedure shown in FIG. 4 further includes the following steps.

S420: The responder device sends the second frame to the initiator device, or the initiator device receives the second frame from the responder device.

Specifically, if the responder device receives the first frame on the first narrowband channel, the responder device sends the second frame to the initiator device on a same narrowband channel (namely, the first narrowband channel). The second frame is used to respond to the first frame.

For example, the second frame may be referred to as a response (response) frame.

Optionally, the second frame includes but is not limited to at least one of the following information: information indicating duration of a second UWB signal in each millisecond, information indicating a sequence used by a second UWB signal, information indicating a quantity of segments of a second UWB signal, information indicating a total length of the second UWB signal, or indication information of a measurement periodicity. The second UWB signal is a UWB signal that is to be sent by the responder device and that is for measurement.

The duration of the second UWB signal in each millisecond indicates a time length of each segment signal when the to-be-sent second UWB signal is divided into a plurality of segment signals. For example, generally, the initiator device divides a to-be-transmitted UWB signal into a plurality of segment signals, where a time length of each segment signal is less than one millisecond, and then sends only one segment signal in each millisecond.

The sequence used by the second UWB signal indicates the responder device to generate, based on a sequence, the to-be-sent second UWB signal, and the sequence includes but is not limited to:

a maximum length sequence, where a sequence length is 2^m-1, and because a sequence obtained after cyclic shift is performed on the M sequence is still an M sequence, and the M sequence obtained after the cyclic shift is performed has very low correlation (almost orthogonal) with an original sequence, different devices may use M sequences formed by performing cyclic shift on the M sequence for different bits, so that UWB signals sent by the different devices are almost orthogonal, thereby reducing interference between the UWB signals;

a row or column of a Hadamard matrix, where the Hadamard matrix is a matrix formed by only elements 1 and -1, and all rows of the Hadamard matrix are orthogonal to each other, and all columns are also orthogonal to each other, and different UWB devices may use different rows or columns of the Hadamard matrix, and UWB signals sent by the different devices may be orthogonal to each other, thereby reducing interference between the UWB signals; and

a gold sequence, where the gold sequence is obtained by multiplying elements corresponding to elements in two maximum length sequences of a same length, and has a similar property to the maximum length sequence.

It should be noted that, in this embodiment of this application, that the responder device generates the to-be-sent second UWB signal based on a sequence is not limited. For details, refer to generation of a current UWB signal.

The quantity of segments of the second UWB signal indicates a quantity of segment signals when the to-be-sent second UWB signal is divided into a plurality of segment signals.

The total length of the second UWB signal indicates a time length of the to-be-sent second UWB signal.

The indication information of the measurement periodicity may indicate which measurement periodicity the current measurement periodicity is.

Further, after receiving the second frame, the initiator device may start the data measurement. The method procedure shown in FIG. 4 further includes the following steps.

S430: The initiator device sends the first UWB signal to the responder device, or the responder device receives the first UWB signal from the initiator device.

Specifically, after receiving the second frame, the initiator device may send the first UWB signal on the first UWB channel.

In a possible implementation, to increase transmit power of the first UWB signal, the first UWB signal may be divided into a plurality of segment signals for sending in a sending process. Only one segment signal is sent in each millisecond to increase instantaneous transmit power, and an impulse sequence of each segment signal is randomly generated based on a key, or may be a predefined sequence.

For example, that the first UWB signal is sent in segments includes: The initiator device divides the first UWB signal into a plurality of first segment signals, where a time length of each first segment signal is less than a first threshold (for example, less than one millisecond); and the initiator device sends one first segment signal to the responder device on the first UWB channel at intervals of the first threshold.

Optionally, the first threshold may be predefined, or may be determined by a transmitting end device and a receiving end device through negotiation. The first threshold includes but is not limited to one millisecond, 0.5 millisecond, or the like. A specific value of the first threshold is not limited in this embodiment of this application. For example, a value of the first threshold may be adjusted and set based on factors such as maximum power spectral density of a transmitted UWB signal and an increase multiple of segment UWB transmission power.

In another possible implementation, when increasing transmit power of the first UWB signal is not considered, the initiator device may further send the first UWB signal without segmenting.

S440: The responder device sends the second UWB signal to the initiator device, or the initiator device receives the second UWB signal from the responder device.

Specifically, in a data measurement process, when the initiator device sends the first UWB signal to the responder device, the responder device also needs to send the second UWB signal to the initiator device. For example, the responder device replies the second UWB signal in a segment transmission manner in a middle time period in which the initiator device sends two consecutive first segment signals.

For example, similar to that the first UWB signal is sent in segments, that the second UWB signal is sent in segments includes:

The responder device divides the second UWB signal into a plurality of second segment signals, where a time length of each second segment signal is less than the first threshold (for example, less than one millisecond), and the initiator device sends one second segment signal to the initiator device every one millisecond on the first UWB channel, where time at which the second segment signal is sent is a middle time period in which two adjacent first segment signals are received.

For example, that the first UWB signal and the second UWB signal are used to complete ranging may be understood as follows: The initiator device sends the first UWB signal at a moment T1, the responder device estimates T2 (arrival time of an initiation ranging signal) based on the first UWB signal, the responder device sends the second UWB signal at a moment T3, and the initiator device estimates T4 (arrival time of a response ranging signal) based on a ranging signal sent by the responder device. After sending the ranging signal, the responder device sends a data frame carrying T2 and T3. A distance between the initiator device and the responder device is estimated as:

$$d = \frac{(T_1 - T_4) - (T_3 - T_2)}{2} c,$$

where c is a speed of light.

That the first UWB signal and the second UWB signal are used to complete sensing is similar to that the first UWB signal and the second UWB signal are used to complete ranging. A difference lies in that during ranging, only propagation time of a shortest path is concerned, and information of other multipath signals is not concerned; while during sensing, transmission delays and incident angles and other information of different multipath propagation signals need to be separately measured, where this information may be obtained through calculation based on a CIR, and the responder device may directly feed back a CIR result to the initiator device, or may feed back an estimated result of sensing information after calculation based on a CIR result.

That is, in the ranging scenario, the measurement result may refer to the foregoing T2 and T3, and in the sensing scenario, the measurement result may refer to a CIR result or an estimated result of sensing information.

It should be noted that, the foregoing merely describes, by using an example, how the first UWB signal and the second UWB signal are used to complete ranging or sensing, and does not constitute any limitation on the protection scope of this application. In this embodiment of this application, a specific principle of the first UWB signal and the second UWB signal being used to complete ranging or sensing is not limited. For details, refer to current related descriptions of implementing ranging or sensing by using a UWB signal.

Specifically, in this embodiment, a trigger frame may be delivered to trigger a measurement result reporting procedure. There are the following two manners based on whether a moment at which the trigger frame is delivered is after a moment at which transmission of the UWB signals is completed.

Manner 1: The measurement result reporting procedure is triggered after the data measurement is completed.

It should be understood that the measurement result needs to be reported after the data measurement is completed.

In a possible implementation, that the data measurement is completed may be understood as that receiving and sending of the UWB signals are completed.

For example, receiving and sending of both the first UWB signal and the second UWB signal are completed, and data measurement of a current measurement periodicity is obtained through measurement.

In another possible implementation, that the data measurement is completed may be understood as that the data measurement in a measurement periodicity before a current measurement data periodicity is completed.

For example, although both the first UWB signal and the second UWB signal are in a sending process, data measurement in a measurement periodicity before a current periodicity is completed. That both the first UWB signal and the second UWB signal are in the sending process includes at least the following two cases:

(1) In a case in which the UWB signal is transmitted in segments, that the UWB signal is in the transmission process may be understood that transmission of a plurality of segment signals is not all completed. For example, the UWB signal is divided into three segment signals (a segment signal #1, a segment signal #2, and a segment signal #3), and transmission of the segment signal #1 and the segment signal #2 is completed, but transmission of the segment signal #3 does not start. In this case, it may be understood as that the UWB signal is still in the transmission process.

(2) In a case in which the UWB signal is not transmitted in segments, that the UWB signal is in the transmission process may be understood that transmission of the UWB signal does not end. For example, transmission of the UWB signal starts at a moment #1, transmission ends at a moment #2, and a moment between the moment #1 and the moment #2 may be understood as a moment that the UWB signal is still in the transmission process.

Other possible cases are not listed herein.

In Manner 1, to avoid a measurement result reporting failure, the measurement result may be reported after the measurement result reporting procedure is triggered, to ensure measurement result reporting performance.

In Manner 1, the method procedure shown in FIG. 4 further includes the following steps.

S450: The initiator device sends a first trigger frame to the responder device, or the responder device receives a first trigger frame from the initiator device.

Specifically, the initiator device sends the first trigger frame to the responder device on a second narrowband channel. The first trigger frame is used to trigger the responder device to report a first measurement result. The first measurement result includes all or a part of a data measurement result, and the data measurement result may be a measurement result of a current measurement periodicity, or may be a measurement result of another measurement periodicity before the current periodicity.

The first trigger frame is delivered to trigger a measurement result reporting procedure. This can effectively improve measurement result reporting reliability, and effectively avoid a reporting failure when the measurement result is directly reported on the first narrowband channel.

For example, the second narrowband channel is the first narrowband channel. For example, in a process of measuring data based on the first UWB signal and the second UWB signal, the first narrowband channel is not occupied by another device.

For example, the second narrowband channel is a narrowband channel different from the first narrowband channel.

Optionally, the first trigger frame includes information indicating content included in the first measurement result, and/or information indicating a form of the first measurement result. The content included in the first measurement result may be a CIR, a difference result of the CIR, and an estimated sensing parameter including information such as an incident direction, a delay, and Doppler of each transmission path, and timestamp information of channel arrival and departure. The form of the first measurement result may be a form in which the first measurement result is reported, for example, a binary form or a hexadecimal form.

For ease of understanding, a time sequence relationship between sending the first trigger frame, sending the first frame, receiving the second frame, sending the first UWB signal, and receiving the second UWB signal is described with reference to FIG. 5. FIG. 5 is a diagram of a sending time sequence corresponding to the first trigger frame according to this embodiment of this application.

It can be seen from FIG. 5 that the initiator device sends the first trigger frame to the responder device after transmission of the first UWB signal and the second UWB signal ends.

For example, to ensure that the responder device can correctly receive the first trigger frame, the initiator device and the responder device may negotiate the second narrowband channel for sending the first trigger frame. When the initiator device sends the first trigger frame to the responder device on the second narrowband channel, the responder device can receive the first trigger frame on the second narrowband channel. The method procedure shown in FIG. 4 further includes the following steps.

S460: The initiator device sends first indication information to the responder device, or the responder device receives first indication information from the initiator device.

The first indication information indicates a narrowband channel for sending a trigger frame, the trigger frame includes the first trigger frame, and the narrowband channel includes the second narrowband channel.

Specifically, the trigger frame is sent on the corresponding narrowband channel, and different trigger frames may be sent on different narrowband channels. That the first indication information indicates a narrowband channel of the trigger frame may be understood as that the first indication information indicates a frequency hopping operation manner of a narrowband system.

In a possible implementation, that the first indication information indicates a frequency hopping operation manner of a narrowband system includes:

The first indication information includes information indicating a start moment of frequency hopping operation of the narrowband system, information indicating a frequency hopping start frequency band, information indicating a frequency hopping end frequency band, information indicating a frequency hopping frequency band interval of the narrowband system, and information indicating a frequency hopping time interval.

For example, the first indication information includes information indicating a moment #1, a frequency band #1, a frequency band #2, a frequency hopping frequency band interval #1, and a frequency hopping time interval #1, where the moment #1 may be an end moment of transmission of the first UWB signal and the second UWB signal, namely, the information indicating the start moment of the frequency hopping operation of the narrowband system, the frequency band #1 is the frequency hopping start frequency band (for example, 10 MHz to 20 MHz), the frequency band #2 is the frequency hopping end frequency band (for example, 50 MHz to 60 MHz), the frequency hopping frequency band interval is #110 MHz, and the frequency hopping time interval #1 is 600 $\mu$s.

In this example, the frequency hopping operation manner of the narrowband system includes:

The narrowband system operates in the frequency band #1 at the moment #1, and may send a trigger frame on a narrowband channel #1 corresponding to the frequency band #1; and the narrowband system operates in the frequency band #3 after a frequency hopping time interval #1 of the moment #1 (for example, the moment #1+600 $\mu$s), and may send a trigger frame on a narrowband channel #2 corresponding to the frequency band #3 (for example, 20 MHz to 30 MHz)...

In another possible implementation, that the first indication information indicates a frequency hopping operation manner of a narrowband system includes:

The first indication information includes information indicating a start moment of the frequency hopping operation of the narrowband system, information indicating a frequency band, and information indicating a frequency hopping time interval.

For example, the first indication information includes information indicating a moment #1, a frequency band #1, a frequency band #2, a frequency band #3, and a frequency hopping time interval #1, where the moment #1 may be an end moment of transmission of the first UWB signal and the second UWB signal, namely, the information indicating the start moment of the frequency hopping operation of the narrowband system, the frequency band #1, the frequency band #2, and the frequency band #3 are the information indicating the frequency bands, and indicate that frequency bands in which the narrowband system operates may sequentially hop from the frequency band #1 to the frequency band #2, then hop from the frequency band #2 to the frequency band #3, and then hop from the frequency band #3 to the frequency band #1, ..., and the frequency hopping time interval #1 is 600 μs.

In this example, the frequency hopping operation manner of the narrowband system includes:

The narrowband system operates in the frequency band #1 at the moment #1, and may send a trigger frame on a narrowband channel #1 corresponding to the frequency band #1; and the narrowband system operates in the frequency band #2 after a frequency hopping time interval #1 of the moment #1 (for example, the moment #1+600 μs), and may send a trigger frame on a narrowband channel #2 corresponding to the frequency band #2.

In still another possible implementation, that the first indication information indicates a frequency hopping operation manner of a narrowband system includes:

The first indication information includes information indicating a start moment of frequency hopping operation of the narrowband system, information indicating a frequency hopping start frequency band, information indicating a quantity of frequency bands for frequency hopping of the narrowband system, and information indicating a frequency hopping time interval.

It should be understood that the foregoing merely describes how the first indication information indicates the frequency hopping operation manner of the narrowband system by using examples, and does not constitute any limitation on the protection scope of this application. Other information that can indicate the frequency hopping operation manner of the narrowband system also falls within the protection scope of this application.

In addition, a reply to a measurement result and a corresponding trigger frame may be bound to a same narrowband channel for sending, instead of being sent according to the frequency hopping time sequence indicated by the first indication information. For example, after a trigger frame #1 used to trigger reporting of a measurement result #1 is delivered on a narrowband channel #1, frequency hopping time arrives, and the narrowband system needs to perform frequency hopping to a narrowband channel #2 for operation. The measurement result #1 may still be reported on the narrowband channel #1, and there is no need to perform frequency hopping to the narrowband channel #2.

In a possible implementation, the first indication information may be carried in the first frame and sent to the responder device.

It should be understood that the responder device sends the first measurement result to the initiator device only after receiving the first trigger frame. The method procedure shown in FIG. 4 further includes the following steps.

S470: The responder device sends the first measurement result to the initiator device, or the initiator device receives the first measurement result from the responder device.

Specifically, the responder device sends, to the initiator device based on the content and/or the form of the measurement result indicated by the first trigger frame, the first measurement result that meets the content and/or the form of the measurement result.

Based on the foregoing technical solution, the initiator device sends, on the second narrowband channel, the first trigger frame used to trigger reporting of the first measurement result, and the responder device reports the first measurement result in time on the narrowband channel for receiving the first trigger frame. This ensures effectiveness of reporting the first measurement result.

In a possible implementation, the foregoing procedures of delivering the trigger frame and receiving the measurement result may be repeated for a plurality of times.

For example, in a case in which a measurement result fails to be reported, when the initiator device fails to receive the first measurement result, the initiator device may re-obtain the measurement result by re-delivering the trigger frame and receiving the measurement result until the measurement result is successfully obtained, where the re-delivered trigger frame may be sent on the first narrowband channel, or the second narrowband channel for sending the first trigger frame, or another narrowband channel different from the first narrowband channel and the second narrowband channel.

For another example, in a case in which a measurement result is reported in segments for a plurality of times, the trigger frame may trigger reporting of only a part of the measurement result, and obtaining of all of the measurement result may be implemented by delivering the trigger frame for a plurality of times and reporting the measurement result for a plurality of times. The measurement result may be reported in segments. That is, a trigger frame delivered each time may specify a part of the measurement result for reporting, and the responder device does not need to feed back all of the measurement result at a time. When a data amount of the measurement result is large, efficiency and reliability of feeding back the result can be effectively improved, and flexibility of the solution can be improved.

In this implementation, the method procedure shown in FIG. 4 further includes the following steps.

S480: The initiator device sends a second trigger frame to the responder device, or the responder device receives a second trigger frame from the initiator device.

Specifically, the second trigger frame is sent on a third narrowband channel, where the third narrowband channel is different from the second narrowband channel.

S490: The responder device sends a second measurement result to the initiator device, or the initiator device receives a second measurement result from the responder device.

Specifically, the second measurement result is sent on the third narrowband channel.

Optionally, in the case in which the measurement result fails to be reported, the second measurement result is the first measurement result.

Optionally, in the case in which the measurement result is reported in segments for the plurality of times, the second measurement result is all or a part of a measurement result other than the first measurement result in the currently measured data measurement result.

It should be understood that the foregoing delivering of the second trigger frame and receiving of the second measurement result are merely examples for description. The procedures of delivering the trigger frame and receiving the measurement result may be repeated for a plurality of times, and are not limited to the protection scope of this application. For example, the trigger frame may be delivered for more than two times. Details are not described herein again.

That after the measurement procedure ends, the trigger frame is delivered to trigger the measurement result reporting procedure is described in Manner 1. This avoids the reporting failure when the measurement result is directly reported. This embodiment further provides another manner. In a data measurement process, a trigger frame is delivered to trigger a procedure of reporting a measurement result of a previous measurement periodicity, so as to support measurement result reporting of some responder devices that cannot feed back measurement results in time. Being in the data measurement process may be understood as that a UWB signal is in a transmission process.

Descriptions are provided below with reference to Manner 2.

Manner 2: The procedure of reporting a measurement result of a previous measurement periodicity is triggered in a data measurement process of a current measurement periodicity.

In Manner 2, the method procedure shown in FIG. 4 further includes the following steps.

S451: The initiator device sends a third trigger frame to the responder device, or the responder device receives a third trigger frame from the initiator device.

Specifically, in a process of sending the first UWB signal, the initiator device sends the third trigger frame on the first narrowband channel, where the third trigger frame is used to trigger reporting of a third measurement result, and the third measurement result includes all or a part of a data measurement result in a second periodicity, where the second periodicity is a measurement periodicity before a first periodicity.

In a possible implementation, in a case in which the UWB signal is transmitted in segments, that the UWB signal is in a transmission process (for example, the foregoing described process of sending the first UWB signal) may be understood that transmission of a plurality of segment signals is not all completed. For example, the UWB signal is divided into three segment signals (a segment signal #1, a segment signal #2, and a segment signal #3), and transmission of the segment signal #1 and the segment signal #2 is completed, but transmission of the segment signal #3 does not start. In this case, it may be understood as that the UWB signal is still in the transmission process.

In another possible implementation, in a case in which the UWB signal is not transmitted in segments, that the UWB signal is in the transmission process may be understood that transmission of the UWB signal does not end. For example, transmission of the UWB signal starts at a moment #1, transmission ends at a moment #2, and a moment between the moment #1 and the moment #2 may be understood as a moment that the UWB signal is still in the transmission process. In a transmission process of the first UWB signal and the second UWB signal, the third trigger frame is delivered to trigger a procedure of reporting a measurement result of another periodicity before a current measurement periodicity, and reporting of a measurement result of a previous periodicity is triggered in the current measurement periodicity. This helps the responder device that has not completed reporting a measurement result in the previous periodicity to report a measurement result. In addition, a UWB signal and a narrowband signal may be simultaneously received/sent. This improves measurement efficiency.

It should be understood that the first periodicity and the second periodicity are different ranging time blocks described above.

It should be understood that the foregoing process of sending the first UWB signal may be understood as time when the first UWB signal is sent, or may be understood as time before sending of the first UWB signal ends.

It can be learned from the foregoing that, in the process of sending the first UWB signal, the initiator device may send the third trigger frame on the first narrowband channel to trigger reporting of the third measurement result. A channel for transmitting the UWB signal is different from a channel for transmitting the third trigger frame and a channel for transmitting the third measurement result, so that the UWB signal and the narrowband signal are simultaneously transmitted. This improves measurement efficiency.

Optionally, the third trigger frame includes at least one of the following information: information indicating content included in the third measurement result, information indicating a form of the third measurement result, or information indicating the second periodicity.

For ease of understanding, a time sequence relationship between sending the third trigger frame, sending the first frame, receiving the second frame, sending the first UWB signal, and receiving the second UWB signal is described with reference to FIG. 6. FIG. 6 is a diagram of a sending time sequence corresponding to the third trigger frame according to this embodiment of this application.

It can be seen from FIG. 6 that the initiator device sends the third trigger frame to the responder device in a transmission process of the first UWB signal and the second UWB signal of the first periodicity. It should be noted that, the initiator device may also send a trigger frame to the responder device in a transmission process of the first UWB signal and the second UWB signal of the second periodicity, to trigger a procedure of reporting a measurement result of a measurement periodicity before the second periodicity.

Optionally, to ensure that the responder device can correctly receive the third trigger frame, the initiator device and the responder device may negotiate the first narrowband channel for sending the third trigger frame. When the initiator device sends the third trigger frame to the responder device on the first narrowband channel, the responder device can receive the third trigger frame on the first narrowband channel. The method procedure shown in FIG. 4 further includes the following steps.

S461: The initiator device sends second indication information to the responder device, or the responder device receives second indication information from the initiator device.

The second indication information indicates a narrowband channel for sending a trigger frame, the trigger frame includes the third trigger frame, and the narrowband channel includes the first narrowband channel.

In a possible implementation, the second indication information may be carried in the first frame and sent to the responder device.

It should be understood that the responder device sends the third measurement result to the initiator device only after receiving the third trigger frame. The method procedure shown in FIG. 4 further includes the following steps.

S471: The responder device sends the third measurement result to the initiator device, or the initiator device receives the third measurement result from the responder device.

Specifically, the responder device sends, to the initiator device based on the content and/or the form of the measurement result indicated by the third trigger frame, the third measurement result that meets the content and/or the form of the measurement result.

Similar to those in Manner 1, the foregoing procedures of delivering the trigger frame and receiving the measurement result may be repeated for a plurality of times.

S481: The initiator device sends a fourth trigger frame to the responder device, or the responder device receives a fourth trigger frame from the initiator device.

Specifically, the fourth trigger frame is sent on a first narrowband channel, where the first narrowband channel is different from the foregoing first narrowband channel.

S491: The responder device sends a fourth measurement result to the initiator device, or the initiator device receives a fourth measurement result from the responder device.

Specifically, the fourth measurement result is sent on the first narrowband channel.

Optionally, in the case in which the measurement result fails to be reported, the fourth measurement result is the data measurement result measured in the second periodicity. The initiator device may deliver a trigger frame on a different channel to trigger reporting of the measurement result. This significantly enhances system robustness.

Optionally, in the case in which the measurement result is reported in segments for the plurality of times, the fourth measurement result is all or a part of a measurement result other than the third measurement result in the data measurement result measured in the second periodicity. The measurement result may be reported in segments. That is, a trigger frame delivered each time may specify a part of the measurement result for reporting, and the responder device does not need to feed back all of the measurement result at a time. When a data amount of the measurement result is large, efficiency and reliability of feeding back the result can be effectively improved, and flexibility of the solution can be improved.

An embodiment of this application further provides a communication method. In a narrowband protocol-assisted UWB measurement data scenario, after a transmitting end device delivers a first frame that triggers data measurement to trigger a current round of measurement, a responder device reports a measurement report of a previous round by responding to a second frame of the first frame. This effectively simplifies a narrowband interaction procedure and reduces air interface transmission time. Descriptions are provided below with reference to FIG. 7. FIG. 7 is a schematic flowchart of another communication method according to an embodiment of this application. The method includes the following steps.

S710: An initiator device sends a first frame to a responder device, or a responder device receives a first frame from an initiator device.

For related descriptions of the first frame, refer to the descriptions of the first frame in step S410 in FIG. 4. A difference lies in that the first frame in this embodiment may be used to trigger reporting feedback of a data measurement result of a measurement round before a current measurement round in addition to being used to implement the function of the first frame in step S410 for triggering data measurement of the current measurement round. For example, the first frame is used to trigger data measurement in a third periodicity and trigger feedback of a data measurement result in a fourth periodicity.

Further, after receiving the first frame, the responder device may feed back a second frame to the initiator device in response to the first frame. A method procedure shown in FIG. 7 further includes the following steps.

S720: The responder device sends the second frame to the initiator device, or the initiator device receives the second frame from the responder device. For related descriptions of the second frame, refer to the descriptions of the second frame in step S420 in FIG. 4. A difference lies in that the second frame in this embodiment may be used to implement a function of reporting a measurement result of a previous measurement round in addition to being used to implement the function of the second frame in step S420. Specifically:

The second frame includes a fifth measurement result, the fifth measurement result includes all or a part of the data measurement result in the fourth periodicity, and the fourth periodicity is a measurement periodicity before the third periodicity.

For example, that the fourth periodicity is a measurement periodicity before the third periodicity may be understood that the second frame may carry a measurement report of a previous round of ranging or sensing measurement at a responder.

A new measurement result feedback procedure is defined in the embodiment shown in FIG. 7. Delayed feedback of a measurement report may be supported. In a next round of ranging or sensing measurement, a response frame responding to a poll frame carries the measurement report. This effectively simplifies a narrowband interaction procedure and reduces air interface transmission time.

In a possible implementation, if the fifth measurement result fails to be transmitted (for example, the fifth measurement result obtained by an initiator from the second frame fails to be transmitted), the initiator may re-send the first frame to obtain the fifth measurement result.

In another possible implementation, if the fifth measurement result is the part of the data measurement result in the fourth periodicity (for example, the fifth measurement result is a first part of the data measurement result in the fourth periodicity), an initiator may re-send the first frame to obtain another part of the data measurement result in the fourth periodicity.

That is, an interaction process of the poll frame and the response frame may be repeated for a plurality of times, to cope with a report obtaining failure; or in response to report segment transmission, a part of report content is obtained each trigger.

Further, after receiving the second frame, the initiator device may start the data measurement. The method procedure shown in FIG. 7 further includes the following steps.

S730: The initiator device sends a first UWB signal to the responder device, or the responder device receives a first UWB signal from the initiator device. For related descriptions of the first UWB signal, refer to the descriptions of the first UWB signal in step S430 in FIG. 4. Details are not described herein again.

S740: The responder device sends a second UWB signal to the initiator device, or the initiator device receives a second UWB signal from the responder device. For related descriptions of the second UWB signal, refer to the descriptions of the second UWB signal in step S440 in FIG. 4. Details are not described herein again.

In each round of ranging or sensing measurement, the initiator device may repeat the measurement procedure shown in FIG. 7 with a plurality of different responder devices, so as to implement one-to-many station ranging or sensing. A narrowband system in each round of measurement may be on a same channel, or may be on a different channel.

For ease of understanding, a time sequence relationship between sending the first frame, receiving the second frame, sending the first UWB signal, and receiving the second UWB signal is described with reference to FIG. 8. FIG. 8 is a diagram of a frame transmission time sequence according to this embodiment of this application.

An embodiment of this application further provides a communication method. In a narrowband protocol-assisted UWB measurement data scenario, communication of a narrowband system may have a plurality of different modulation and mapping manners and different data rates, and different narrowband physical layer protocol data units (PHY Protocol Data Units, PPDUs) may have different start-of-frame delimiter (Start-of-Frame Delimiter, SFD) sequences. Therefore, before narrowband-assisted UWB measurement data (such as ranging or sensing) is performed, an initialization and handshake negotiation process may be used to determine arrangement of a parameter in a measurement procedure. How to negotiate the parameter in the measurement procedure is described below with reference to FIG. 9. FIG. 9 is a schematic flowchart of still another communication method according to an embodiment of this application. The method includes the following steps.

S910: An initiator device sends a fourth frame to a responder device, or a responder device receives a fourth frame from an initiator device.

Specifically, the initiator device sends the fourth frame (for example, an advertisement poll (Advertisement poll, ADV-POLL) frame) to the responder device, where the fourth frame indicates to negotiate a parameter in a measurement procedure. For example, the fourth frame carries the parameter in the measurement procedure supported by the initiator device.

Further, in this embodiment, after receiving the fourth frame, the responder device may respond to the fourth frame by using a fifth frame. A method procedure shown in FIG. 9 further includes the following steps.

S920: The responder device sends the fifth frame to the initiator device, or the initiator device receives the fifth frame from the responder device.

Specifically, the responder device sends the fifth frame (for example, an advertisement response (Advertisement response, ADV-RESP) frame) to the initiator device, where the fifth frame includes the parameter supported by the responder device and the initiator device.

For example, after receiving the fifth frame, the initiator device may send a sixth frame, and agree to start measurement after a period of time. That is, the method procedure shown in FIG. 9 may further include the following step.

S930: The initiator device sends the sixth frame to the responder device, or the responder device receives the sixth frame from the initiator device.

Specifically, the sixth frame indicates to start the measurement after first duration after the sixth frame. After negotiation is completed, the responder device and the initiator device may perform the measurement based on the negotiated parameter. For a specific measurement procedure, refer to the descriptions of the communication method shown in FIG. 4 and/or FIG. 7. Details are not described herein again.

For ease of understanding, a time sequence relationship between the fourth frame, the fifth frame, and the sixth frame is described with reference to (a) in FIG. 10. (a) in FIG. 10 is a diagram of another frame transmission time sequence according to an embodiment of this application.

Optionally, the parameter in the measurement procedure includes but is not limited to initial channel information, UWB measurement channel information, or physical layer rate information.

For ease of understanding, parameter information that may be related in a narrowband-assisted UWB measurement procedure is briefly described with reference to Table 1a.

**Table 1a**

| Parameters (Parameters) | Value range/options (Value range/options) | Default value (Default value) | Description (Description) |
|---|---|---|---|
| Initial channel | Narrowband channel: 0 to 249 | 2 | |
| UWB ranging/-sensing channel (UWB ranging/-sensing channel) | 5, 6, 8, 9, 10, ... | 9 | |
| Physical layer rate (PHY rate) | #1 to #5<br>#6: Reserved (reserved)<br>#7: Reserved (reserved)<br>#8: #1 with an alternative symbol-to-chip mapping (with alternative symbol-to-chip mapping) table<br>#9: #2 with an alternative symbol-to-chip mapping (with alternative symbol-to-chip mapping) table<br>#10: #3 with an alternative symbol-to-chip mapping (with alternative symbol-to-chip mapping) table<br>#11: #4 with an alternative symbol-to-chip mapping (with alternative symbol-to-chip mapping) table<br>#12: #5 with an alternative symbol-to-chip mapping (with alternative symbol-to-chip mapping) table<br>#13: Dynamic SFD signaling with a default symbol-to-chip mapping (default symbol-to-chip mapping) table (dynamic NB SFD signaling with default symbol-to-chip mapping)<br>#14: Dynamic SFD signaling with a default symbol-to-chip mapping (default symbol-to-chip mapping) table (dynamic NB SFD signaling with alternative symbol-to-chip mapping) | #1: 250k uncoded (uncoded) | |

A first value to a fifth value (namely, #1 to #5 in Table 1a) of a physical layer rate (PHY rate) field in Table 1a respectively indicate five different rate configuration parameter combinations for narrowband transmission when default symbol-to-chip mapping is used. A sixth value (namely, #6 in Table 1a) and a seventh value (namely, #7 in Table 1a) of the PHY rate field may be reserved or for other indications. An eighth value to a twelfth value (namely, #8 to #12 in Table 1a) of the PHY rate field respectively indicate five different rate configuration parameter combinations for narrowband transmission when alternative symbol-to-chip mapping is used.

For ease of understanding, forms of the five different rate configuration parameter combinations in this embodiment are briefly described with reference to Table 1b to Table 1d.

Specifically, there may be a plurality of different choices for a preamble length of a PPDU in a narrowband system, an SF of an SFD field, a PHR length, an SF of a payload part, and an encoding manner of the payload. Based on different rates, the following five configuration combinations are preferred. Specific combination parameters are shown in the following Table 1b.

**Table 1b**

| Config #<br>Data Rate | Preamble Length (Symbols) | SFD Length (Symbols) | SF in Preamble & SFD | PHR Length (Symbols) | SF in PHR & Payload | FEC in PHR & Payload |
|---|---|---|---|---|---|---|
| **#1**<br>250 kbps | 8 | 2 | 32<br>Note-1 | 2 | 32<br>Note-1 | No |
| **#2**<br>500 kbps | 4 | 2 | 32<br>Note-1 | 7<br>Note-2 | 8<br>Note-3 | CL7<br>Note-6 |
| **#3**<br>1000 kbps | 4 | 2 | 32<br>Note-1 | 7<br>Note-2 | 8<br>Note-3 | CL7 for PHR<br>Note-6<br>No FEC on Payload |
| **#4**<br>250 kbps | 8 | 2 | 32<br>Note-1 | 7<br>Note-2 | 16<br>Note-4 | CL7<br>Note-6 |
| **#5**<br>1000 kbps | 4 | 2 | 32<br>Note-1 | 7<br>Note-2 | 4<br>Note-5 | CL7<br>Note-6 |

It should be noted that the default symbol-to-chip mapping (default symbol-to-chip mapping) table is based on Table 12-1 or Table 21-16 in the IEEE 802.15.4-2020 standard document. Mapping tables whose lengths are 32 and 16 are shown in the following Table 1c and Table 1d, and may be used as an alternative symbol-to-chip mapping (alternative symbol-to-chip mapping) relationship table:

**Table 1c**

| Data symbol | Chip values ($c_0$ $c_1$ $\cdots$ $c_{30}$ $c_{31}$) |
|---|---|
| 0 | 1 1 0 0 1 0 1 0 1 0 0 1 0 0 0 0 1 1 0 0 1 0 1 0 0 1 1 0 1 1 1 1 |
| 1 | 1 0 1 0 1 1 0 0 1 1 1 1 0 1 1 0 1 0 1 1 0 1 1 0 0 0 0 0 1 0 0 1 |
| 2 | 1 0 0 1 0 0 0 0 1 1 0 0 1 0 1 0 1 0 0 1 0 0 0 0 0 0 1 1 0 1 0 1 |
| 3 | 1 1 1 1 0 1 1 0 1 0 1 0 1 1 0 0 1 1 1 1 0 1 1 0 0 1 0 1 0 0 1 1 |
| 4 | 1 0 0 1 1 1 1 1 0 0 1 1 1 0 1 0 1 0 0 1 1 1 1 1 1 1 0 0 0 1 0 1 |
| 5 | 1 1 1 1 1 0 0 1 0 1 0 1 1 1 0 0 1 1 1 0 0 0 1 0 0 0 1 1 |
| 6 | 1 1 0 0 0 1 0 1 0 1 1 0 0 0 0 0 1 1 0 0 0 1 0 1 1 0 0 1 1 1 1 1 |
| 7 | 1 0 1 0 0 0 1 1 0 0 0 0 0 1 1 0 1 0 1 0 0 0 1 1 1 1 1 1 0 0 1 |
| 8 | 1 0 0 1 1 1 1 1 1 1 0 0 0 1 0 1 0 1 1 0 0 0 0 0 1 1 0 0 0 1 0 1 |
| 9 | 1 1 1 0 0 1 1 0 1 0 0 0 1 1 0 0 0 0 0 1 1 0 1 0 1 0 0 0 1 1 |
| 10 | 1 1 0 0 0 1 0 1 1 0 0 1 1 1 1 1 0 0 1 1 1 0 1 0 1 0 0 1 1 1 1 1 |
| 11 | 1 0 1 0 0 0 1 1 1 1 1 1 1 0 0 1 0 1 0 1 1 1 0 0 1 1 1 1 1 0 0 1 |
| 12 | 1 1 0 0 1 0 1 0 0 1 1 0 1 1 1 1 0 0 1 1 0 1 0 1 0 1 1 0 1 1 1 1 |
| 13 | 1 0 1 0 1 1 0 0 0 0 0 1 0 0 1 0 1 0 1 0 0 1 1 0 0 0 0 1 0 0 1 |
| 14 | 1 0 0 1 0 0 0 0 0 0 1 1 0 1 0 1 0 1 1 0 1 1 1 1 0 0 1 1 0 1 0 1 |
| 15 | 1 1 1 1 0 1 1 0 0 1 0 1 0 0 1 1 0 0 0 0 1 0 0 1 0 1 0 1 0 0 1 1 |

**Table 1d**

| Data symbol | Chip values ($c_0 c_1 \cdots c_{14} c_{15}$) |
|---|---|
| 0 | 1 1 1 1 1 1 1 1 1 1 1 1 1 1 1 1 |
| 1 | 1 0 1 0 1 0 1 0 1 0 1 0 1 0 1 0 |
| 2 | 1 1 0 0 1 1 0 0 1 1 0 0 1 1 0 0 |
| 3 | 1 0 0 1 1 0 0 1 1 0 0 1 1 0 0 1 |
| 4 | 1 1 1 1 0 0 0 0 1 1 1 1 0 0 0 0 |
| 5 | 1 0 1 0 0 1 0 1 1 0 1 0 0 1 0 1 |
| 6 | 1 1 0 0 0 0 1 1 1 1 0 0 0 0 1 1 |
| 7 | 1 0 0 1 0 1 1 0 1 0 0 1 0 1 1 0 |
| 8 | 1 1 1 1 1 1 1 1 0 0 0 0 0 0 0 0 |
| 9 | 1 0 1 0 1 0 1 0 0 1 0 1 0 1 0 1 |
| 10 | 1 1 0 0 1 1 0 0 0 0 1 1 0 0 1 1 |
| 11 | 1 0 0 1 1 0 0 1 0 1 1 0 0 1 1 0 |
| 12 | 1 1 1 1 0 0 0 0 0 0 0 0 1 1 1 1 |
| 13 | 1 0 1 0 0 1 0 1 0 1 0 1 1 0 1 0 |
| 14 | 1 1 0 0 0 0 1 1 0 0 1 1 1 1 0 0 |
| 15 | 1 0 0 1 0 1 1 0 0 1 1 0 1 0 0 1 |

Specifically, a structure of a PPDU in a narrowband system in a narrowband-assisted ranging or sensing system is shown in (b) in FIG. 10, and includes a preamble (preamble), an SFD, a PHR, and payloads (payloads). In addition, when a symbol-to-chip mapping table with a length of 16 is used, odd symbols are used in the foregoing Table 1d, and even symbols are used in a reverse sequence of a sequence corresponding to the foregoing Table 1d. Details are shown in the following (c) in FIG. 10.

A thirteenth value (namely, #13 in Table 1a) of the PHY rate field indicates that the narrowband system uses the default symbol-to-chip mapping, and a specific rate configuration needs to be determined by using a narrowband SFD field. A fourteenth value (namely, #14 in Table 1a) of the PHY rate field indicates that the narrowband system uses the alternative symbol-to-chip mapping, and a specific rate configuration needs to be determined by using a narrowband SFD field. During narrowband transmission, a dynamic SFD value may indicate a data rate of a payload, and different SFD values indicate different transmission rates of a payload part.

It should be noted that, during narrowband data modulation and mapping, a group of symbol-to-chip mapping (referred to as default symbol-to-chip mapping) tables have been defined in an existing standard, including three different pieces of mapping whose chip lengths are 32, 16, and 8. In addition, a group of new symbol-to-chip mapping (referred to as alternative symbol-to-chip mapping) tables are defined in the existing standard, including two different pieces of mapping whose chip lengths are 32 and 16. When the alternative symbol-to-chip mapping manner is selected, if a symbol-to-chip mapping table with a length of 8 needs to be used, a mapping table with a length of 8 in default symbol-to-chip mapping may be used.

In addition, the symbol-to-chip mapping manner may alternatively be separately indicated by using another field (for example, a mapping type field), so that a specific narrowband modulation and mapping manner can be determined together based on a PHY rate and the mapping type field. Corresponding parameter information is shown in the following Table 2.

**Table 2**

| Parameters | Value range/options | Default value | Description |
|---|---|---|---|
| Initial channel | Narrowband channel: 0 to 249 | 2 | |
| UWB ranging/sensing channel (UWB ranging/sensing channel) | 5, 6, 8, 9, 10, ... | 9 | |

(continued)

| Parameters | Value range/options | Default value | Description |
|---|---|---|---|
| Physical layer rate (PHY rate) | #1 to #5<br>#6: reserved<br>#7: reserved<br>#8: dynamic NB SFD signaling | #1: 250k un-coded | |
| Mapping manner (Mapping Type) | #1 default symbol-to-chip map-ping<br>#2 alternative symbol-to-chip mapping | #1 default symbol-to-chip mapping | |

Alternatively, whether a dynamic SFD indicates a rate and a symbol-to-chip mapping manner may be separately indicated by using separate fields, and corresponding parameter information is shown in Table 3.

| Parameters | Value range/options | Default value | Description |
|---|---|---|---|
| Initial channel | Narrowband channel: 0 to 249 | 2 | |
| UWB ranging/sensing channel (UWB ranging/sensing channel) | 5, 6, 8, 9, 10, ... | 9 | |
| Physical layer rate (PHY rate) | #1 to #5<br>#6: reserved<br>#7: reserved | #1: 250k un-coded | |
| Dynamic SFD (dynamic NB SFD) | #1 fixed NB SFD<br>#2 dynamic NB SFD | #1 fixed NB SFD | |
| Mapping manner (Mapping Type) | #1 default symbol-to-chip map-ping<br>#2 alternative symbol-to-chip mapping | #1 default symbol-to-chip mapping | |

Alternatively, whether to use a dynamic SFD indication may be used as a separate field for indication, and corresponding parameter information is shown in the following Table 4.

**Table 4**

| Parameters | Value range/options | Default value | Description |
|---|---|---|---|
| Initial channel | Narrowband channel: 0 to 249 | 2 | |
| UWB ranging/sensing channel (UWB ranging/sensing channel) | 5, 6, 8, 9, 10, ... | 9 | |
| Physical layer rate (PHY rate) | #1 to #5<br>#6: reserved<br>#7: reserved<br>#8: #1 with alternative symbol-to-chip mapping<br>#9: #2 with alternative symbol-to-chip mapping<br>#10: #3 with alternative symbol-to-chip mapping<br>#11: #4 with alternative symbol-to-chip mapping<br>#12: #5 with alternative symbol-to-chip mapping | #1: 250k uncoded | |

(continued)

| Parameters | Value range/options | Default value | Description |
|---|---|---|---|
| Dynamic SFD (dynamic NB SFD) | #1 fixed NB SFD<br>#2 dynamic NB SFD | #1 fixed NB SFD | |

It should be understood that Table 1a to Table 4 are merely examples for describing the possible forms of negotiated parameters, and do not constitute any limitation on the protection scope of this application. For example, functions indicated by some values in fields (for example, the PHY rate field or the SFD field) in Table 1a to Table 4 are used, and functions indicated by other remaining values are not used. For example, only the eighth value and the eleventh value exist in the eighth value to the twelfth value (namely, #8 to #12 in Table 1a) of the PHY rate field. This still falls within the protection scope of this application.

In the communication method shown in FIG. 9, the responder device and the initiator device can initialize and negotiate parameter settings through handshake in the narrowband-assisted UWB measurement procedure by using the fourth frame and the fifth frame, and can determine, by using a corresponding field design, a modulation and mapping manner corresponding to each field of the PPDU in the narrowband system. This reduces signaling overheads through multiplexing and joint indication, and supports a plurality of different pieces of mapping and dynamic SFD functions. It should be noted that, without negotiation, the narrowband-assisted UWB measurement procedure may use fixed default parameters, so that initial measurement can be performed. In addition, in the narrowband-assisted UWB measurement process, corresponding parameters and configuration information may also be updated by using the initialization and handshake negotiation procedure. A specific update procedure is similar to the negotiation procedure shown in FIG. 9, and details are not described again.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, an initiator device and a responder device) in a conventional network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by the device (for example, the initiator device and the responder device) may also be implemented by a component (for example, a chip or a circuit) of the device.

The foregoing describes in detail, with reference to FIG. 4, the communication method provided in embodiments of this application. The foregoing communication method is mainly described from a perspective of interaction between the initiator device and the responder device. It may be understood that, to implement the foregoing functions, the initiator device and the responder device include corresponding hardware structures and/or software modules for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, an initiator device or a responder device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. In actual implementation, another division manner may be used. Descriptions are provided below by using an example in which each functional module is obtained through division based on each corresponding function.

FIG. 11 is a block diagram of a communication apparatus according to an embodiment of this application. As shown in FIG. 11, the apparatus 700 may include a transceiver unit 710 and a processing unit 720. The transceiver unit 710 may communicate with the outside, and the processing unit 720 is configured to process data. The transceiver unit 710 may also be referred to as a communication interface or a communication unit.

Optionally, the apparatus 700 may further include a storage unit. The storage unit may be configured to store instructions and/or data. The processing unit 720 may read the instructions and/or the data in the storage unit, so that the apparatus implements the foregoing method embodiment.

The apparatus 700 may be configured to perform actions performed by a transceiver device (for example, the initiator device and the responder device) in the foregoing method embodiment. In this case, the apparatus 700 may be the transceiver device or a component that can be configured in the transceiver device. The transceiver unit 710 is configured to perform receiving and sending related operations of the transceiver device in the foregoing method embodiment, and the processing unit 720 is configured to perform processing related operations of the transceiver device in the foregoing method embodiment.

In a design, the apparatus 700 is configured to perform actions performed by the initiator device in the foregoing method embodiment.

In a possible implementation, the transceiver unit 710 is configured to send a first frame on a first narrowband channel, where the first frame is used to trigger data measurement. The transceiver unit 710 is configured to: send a first ultra-wideband UWB signal on a first ultra-wideband UWB channel, and receive a second UWB signal on the first UWB channel, where the first UWB signal and the second UWB signal are used to perform the data measurement to obtain a data measurement result. The transceiver unit 710 is configured to send a first trigger frame on a second narrowband channel, where the first trigger frame is used to trigger reporting of a first measurement result, and the first measurement result includes all or a part of the data measurement result.

In another possible implementation, the transceiver unit 710 is configured to send a first frame on a first narrowband channel, where the first frame is used to trigger data measurement in a first periodicity. The transceiver unit 710 is configured to: send a first ultra-wideband UWB signal on a first ultra-wideband UWB channel; and receive a second UWB signal on the first UWB channel, where the first UWB signal and the second UWB signal are used to perform the data measurement to obtain a data measurement result. The transceiver unit 710 is configured to send a third trigger frame on the first narrowband channel when sending the first UWB signal, where the third trigger frame is used to trigger reporting of a third measurement result, the third measurement result includes all or a part of a data measurement result in a second periodicity, and the second periodicity is a measurement periodicity before the first periodicity.

In still another possible implementation, the transceiver unit 710 is configured to send a first frame on a first narrowband channel, where the first frame is used to trigger data measurement in a third periodicity and trigger feedback of a data measurement result in a fourth periodicity. The transceiver unit 710 is configured to receive a second frame on the first narrowband channel, where the second frame is used to respond to the first frame, the second frame includes a fifth measurement result, the fifth measurement result includes all or a part of the data measurement result in the fourth periodicity, and the fourth periodicity is a measurement periodicity before the third periodicity.

In still another possible implementation, the transceiver unit 710 is configured to send a fourth frame on a first narrowband channel, where the fourth frame indicates a parameter in a negotiation measurement procedure, and the fourth frame includes a parameter supported by the initiator device. The transceiver unit 710 is configured to receive a fifth frame on the first narrowband channel, where the fifth frame is used to respond to the fourth frame, and the fifth frame includes a parameter supported by the responder device and the initiator device.

The apparatus 700 may implement the steps or procedures performed by the initiator device in the method embodiments according to embodiments of this application. The apparatus 700 may include units configured to perform the methods performed by the initiator device in the method embodiments. In addition, the units in the apparatus 700 and the foregoing other operations and/or functions are separately used to implement corresponding procedures in the method embodiments of the initiator device in the method embodiments.

When the apparatus 700 is configured to perform the method in FIG. 4, the transceiver unit 710 may be configured to perform the receiving and sending steps in the method, for example, steps S410, S420, S430, S440, S450, S460, S470, S480, S490, S451, S461, S471, S481, and S491, and the processing unit 720 may be configured to perform the processing steps in the method.

When the apparatus 700 is configured to perform the method in FIG. 7, the transceiver unit 710 may be configured to perform the receiving and sending steps in the method, for example, steps S710, S720, S730, and S740, and the processing unit 720 may be configured to perform the processing steps in the method.

When the apparatus 700 is configured to perform the method in FIG. 9, the transceiver unit 710 may be configured to perform the receiving and sending steps in the method, for example, steps S910, S920, and S930, and the processing unit 720 may be configured to perform the processing steps in the method.

It should be understood that a specific process in which the units perform the foregoing corresponding steps is described in detail in the foregoing method embodiments, and for brevity, details are not described herein. In addition, beneficial effect brought by performing the foregoing corresponding steps by the units are described in detail in the foregoing method embodiments, and details are not described herein again.

In another design, the apparatus 700 is configured to perform actions performed by the responder device in the foregoing method embodiment.

In a possible implementation, the transceiver unit 710 is configured to receive a first frame on a first narrowband channel, where the first frame is used to trigger data measurement. The transceiver unit 710 is configured to: receive a first ultra-wideband UWB signal on a first ultra-wideband UWB channel, and send a second UWB signal on the first UWB channel, where the first UWB signal and the second UWB signal are used to perform the data measurement to obtain a data measurement result. When transmission of the first UWB signal and the second UWB signal is completed, the transceiver unit 710 is configured to receive a first trigger frame on a second narrowband channel, where the first trigger frame is used to trigger reporting of a first measurement result, and the first measurement result includes all or a part of the data measurement result.

In another possible implementation, the transceiver unit 710 is configured to receive a first frame on a first narrowband channel, where the first frame is used to trigger data measurement in a first periodicity. The transceiver unit 710 is configured to: receive a first ultra-wideband UWB signal on a first ultra-wideband UWB channel; and send a second UWB signal on the first UWB channel, where the first UWB signal and the second UWB signal are used to perform the data measurement to obtain a data measurement result. The transceiver unit 710 is configured to receive a third trigger frame on the first narrowband channel when receiving the first UWB signal, where the third trigger frame is used to trigger reporting of a third measurement result, the third measurement result includes all or a part of a data measurement result in a second periodicity, and the second periodicity is a measurement periodicity before the first periodicity.

In still another possible implementation, the transceiver unit 710 is configured to receive a first frame on a first narrowband channel, where the first frame is used to trigger data measurement in a third periodicity and trigger feedback of a data measurement result in a fourth periodicity. The transceiver unit 710 is configured to send a second frame on the first narrowband channel, where the second frame is used to respond to the first frame, the second frame includes a fifth measurement result, the fifth measurement result includes all or a part of the data measurement result in the fourth periodicity, and the fourth periodicity is a measurement periodicity before the third periodicity.

In still another possible implementation, the transceiver unit 710 is configured to receive a fourth frame on a first narrowband channel, where the fourth frame indicates a parameter in a negotiation measurement procedure, and the fourth frame includes a parameter supported by the initiator device. The transceiver unit 710 is configured to send a fifth frame on the first narrowband channel, where the fifth frame is used to respond to the fourth frame, and the fifth frame includes a parameter supported by the responder device and the initiator device.

The apparatus 700 may implement the steps or procedures performed by the responder device in the method embodiments according to embodiments of this application. The apparatus 700 may include units configured to perform the methods performed by the responder device in the method embodiments. In addition, the units in the apparatus 700 and the foregoing other operations and, or functions are separately used to implement corresponding procedures in the method embodiments of the responder device in the method embodiments.

When the apparatus 700 is configured to perform the method in FIG. 4, the transceiver unit 710 may be configured to perform the receiving and sending steps in the method, for example, steps S410, S420, S430, S440, S450, S460, S470, S480, S490, S451, S461, S471, S481, and S491, and the processing unit 720 may be configured to perform the processing steps in the method.

When the apparatus 700 is configured to perform the method in FIG. 7, the transceiver unit 710 may be configured to perform the receiving and sending steps in the method, for example, steps S710, S720, S730, and S740, and the processing unit 720 may be configured to perform the processing steps in the method.

When the apparatus 700 is configured to perform the method in FIG. 9, the transceiver unit 710 may be configured to perform the receiving and sending steps in the method, for example, steps S910, S920, and S930, and the processing unit 720 may be configured to perform the processing steps in the method.

It should be understood that a specific process in which the units perform the foregoing corresponding steps is described in detail in the foregoing method embodiments, and for brevity, details are not described herein.

The processing unit 720 in the foregoing embodiment may be implemented by at least one processor or a processor-related circuit. The transceiver unit 710 may be implemented by using a transceiver or a transceiver-related circuit. The storage unit may be implemented by at least one memory.

As shown in FIG. 12, an embodiment of this application further provides an apparatus 800. The apparatus 800 includes a processor 810, and may further include one or more memories 820. The processor 810 is coupled to the memory 820. The memory 820 is configured to store a computer program or instructions and/or data. The processor 810 is configured to execute the computer program or the instructions and/or the data stored in the memory 820, so that the methods in the foregoing method embodiments are performed. Optionally, the apparatus 800 includes one or more processors 810.

Optionally, the memory 820 and the processor 810 may be integrated together, or may be disposed separately.

Optionally, as shown in FIG. 12, the apparatus 800 may further include a transceiver 830. The transceiver 830 is configured to receive and/or send signals. For example, the processor 810 is configured to control the transceiver 830 to receive and/or send signals.

In a solution, the apparatus 800 is configured to implement the operations performed by the transceiver device (for example, the initiator device and the responder device) in the foregoing method embodiments.

An embodiment of this application further provides a computer-readable storage medium. The computer-readable storage medium stores computer instructions used to implement the method performed by the transceiver device (for example, the initiator device and the responder device) in the foregoing method embodiments.

For example, when a computer program is executed by a computer, the computer can implement the methods performed by the transceiver device (for example, the initiator device and the responder device) in the foregoing method embodiments.

An embodiment of this application further provides a computer program product including instructions. When the instructions are executed by a computer, the computer is enabled to implement the methods performed by the transceiver device (for example, the initiator device and the responder device) in the foregoing method embodiments.

An embodiment of this application further provides a communication system. The communication system includes the initiator device and the responder device in the foregoing embodiments.

For explanations and beneficial effect of related content of any one of the apparatuses provided above, refer to the corresponding method embodiments provided above. Details are not described herein again.

It should be understood that, the processor mentioned in embodiments of this application may be a central processing unit (central processing unit, CPU), and may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It may be understood that the memory in embodiments of this application may be a volatile memory or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   sending a first frame on a first narrowband channel, wherein the first frame is used to trigger data measurement;
   sending a first ultra-wideband UWB signal on a first ultra-wideband UWB channel, and receiving a second UWB signal on the first UWB channel, wherein the first UWB signal and the second UWB signal are used to perform the data measurement to obtain a data measurement result; and
   sending a first trigger frame on a second narrowband channel, wherein the first trigger frame is used to trigger reporting of a first measurement result, and the first measurement result comprises all or a part of the data measurement result.

2. The method according to claim 1, wherein the method further comprises:
   sending first indication information, wherein the first indication information indicates a narrowband channel used for sending a trigger frame, the narrowband channel is used to send the trigger frame, the trigger frame comprises the first trigger frame, and the narrowband channel comprises the second narrowband channel.

3. The method according to claim 1 or 2, wherein the method further comprises:

   receiving a second frame on the first narrowband channel, wherein the second frame is used to respond to the first frame; and
   the second frame comprises at least one of the following information:
   information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

4. The method according to any one of claims 1 to 3, wherein when the first measurement result is the part of the data measurement result, the method further comprises:

   sending a second trigger frame on a third narrowband channel, wherein the second trigger frame is used to trigger reporting of a second measurement result; and
   receiving the second measurement result on the third narrowband channel, wherein the second measurement result is all or a part of a measurement result other than the first measurement result in the data measurement result.

5. The method according to any one of claims 1 to 3, wherein when the first measurement result is all of the data measurement result, the method further comprises:

sending a second trigger frame on a third narrowband channel, wherein the second trigger frame is used to trigger reporting of the first measurement result; and
receiving the first measurement result on the third narrowband channel.

6. The method according to any one of claims 1 to 5, wherein the first frame comprises at least one of the following information:
identifier information of a responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

7. A communication method, comprising:

receiving a first frame on a first narrowband channel, wherein the first frame is used to trigger data measurement;
receiving a first ultra-wideband UWB signal on a first ultra-wideband UWB channel, and sending a second UWB signal on the first UWB channel, wherein the first UWB signal and the second UWB signal are used to perform the data measurement to obtain a data measurement result; and
receiving a first trigger frame on a second narrowband channel, wherein the first trigger frame is used to trigger reporting of a first measurement result, and the first measurement result comprises all or a part of the data measurement result.

8. The method according to claim 7, wherein the method further comprises:
receiving first indication information, wherein the first indication information indicates a narrowband channel used for sending a trigger frame, the narrowband channel is used to send the trigger frame, the trigger frame comprises the first trigger frame, and the narrowband channel comprises the second narrowband channel.

9. The method according to claim 7 or 8, wherein the method further comprises: sending a second frame on the first narrowband channel, wherein the second frame is used to respond to the first frame; and
the second frame comprises at least one of the following information:
information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

10. The method according to any one of claims 7 to 9, wherein when the first measurement result is the part of the data measurement result, the method further comprises:

receiving a second trigger frame on a third narrowband channel, wherein the second trigger frame is used to trigger reporting of a second measurement result; and
sending the second measurement result on the third narrowband channel, wherein the second measurement result is all or a part of a measurement result other than the first measurement result in the data measurement result.

11. The method according to any one of claims 7 to 9, wherein when the first measurement result is all of the data measurement result, the method further comprises:

receiving a second trigger frame on a third narrowband channel, wherein the second trigger frame is used to trigger reporting of the first measurement result; and
sending the first measurement result on the third narrowband channel.

12. The method according to any one of claims 7 to 11, wherein the first frame comprises at least one of the following information:
identifier information of a responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

13. A communication apparatus, comprising:

a sending unit, configured to send a first frame on a first narrowband channel, wherein the first frame is used to trigger data measurement, and
the sending unit is further configured to send a first ultra-wideband UWB signal on a first ultra-wideband UWB channel; and
a receiving unit, configured to receive a second UWB signal on the first UWB channel, wherein the first UWB signal and the second UWB signal are used to perform the data measurement to obtain a data measurement result, and
the sending unit is further configured to send a first trigger frame on a second narrowband channel, the first trigger frame is used to trigger reporting of a first measurement result, and the first measurement result comprises all or a part of the data measurement result.

14. The apparatus according to claim 13, wherein the sending unit is further configured to send first indication information, the first indication information indicates a narrowband channel for sending a trigger frame, the narrowband channel is used to send the trigger frame, the trigger frame comprises the first trigger frame, and the narrowband channel comprises the second narrowband channel.

15. The apparatus according to claim 13 or 14, wherein the receiving unit is further configured to receive a second frame on the first narrowband channel, and the second frame is used to respond to the first frame; and
the second frame comprises at least one of the following information:
information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

16. The apparatus according to any one of claims 13 to 15, wherein when the first measurement result is the part of the data measurement result, the sending unit is further configured to send a second trigger frame on a third narrowband channel, and the second trigger frame is used to trigger reporting of a second measurement result; and
the receiving unit is further configured to receive the second measurement result on the third narrowband channel, and the second measurement result is all or a part of a measurement result other than the first measurement result in the data measurement result.

17. The apparatus according to any one of claims 13 to 15, wherein when the first measurement result is all of the data measurement result, the sending unit is further configured to send a second trigger frame on a third narrowband channel, and the second trigger frame is used to trigger reporting of the first measurement result; and
the receiving unit is further configured to receive the first measurement result on the third narrowband channel.

18. The apparatus according to any one of claims 13 to 17, wherein the first frame comprises at least one of the following information:
identifier information of a responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

19. A communication apparatus, comprising:

a receiving unit, configured to receive a first frame on a first narrowband channel, wherein the first frame is used to trigger data measurement, and
the receiving unit is further configured to receive a first ultra-wideband UWB signal on a first ultra-wideband UWB channel; and
a sending unit, configured to send a second UWB signal on the first UWB channel, wherein the first UWB signal and the second UWB signal are used to perform the data measurement to obtain a data measurement result, and
the receiving unit is further configured to receive a first trigger frame on a second narrowband channel, the first trigger frame is used to trigger reporting of a first measurement result, and the first measurement result comprises all or a part of the data measurement result.

20. The apparatus according to claim 19, wherein the receiving unit is further configured to receive first indication information, the first indication information indicates a narrowband channel for sending a trigger frame, the narrowband channel is used to send the trigger frame, the trigger frame comprises the first trigger frame, and the narrowband channel comprises the second narrowband channel.

21. The apparatus according to claim 19 or 20, wherein the sending unit is further configured to send a second frame on the first narrowband channel, and the second frame is used to respond to the first frame; and
the second frame comprises at least one of the following information:
information indicating duration of the second UWB signal in each millisecond, information indicating a sequence used by the second UWB signal, information indicating a quantity of segments of the second UWB signal, information indicating a total length of the second UWB signal, or indication information of a measurement periodicity.

22. The apparatus according to any one of claims 19 to 21, wherein when the first measurement result is the part of the data measurement result, the receiving unit is further configured to receive a second trigger frame on a third narrowband channel, and the second trigger frame is used to trigger reporting of a second measurement result; and the sending unit is further configured to send the second measurement result on the third narrowband channel, and the second measurement result is all or a part of a measurement result other than the first measurement result in the data measurement result.

23. The apparatus according to any one of claims 19 to 22, wherein when the first measurement result is all of the data measurement result, the receiving unit is further configured to receive a second trigger frame on a third narrowband channel, and the second trigger frame is used to trigger reporting of the first measurement result; and
the sending unit is further configured to send the first measurement result on the third narrowband channel.

24. The apparatus according to any one of claims 19 to 23, wherein the first frame comprises at least one of the following information:
identifier information of a responder device, information indicating duration of the first UWB signal in each millisecond, information indicating a sequence used by the first UWB signal, information indicating a quantity of segments of the first UWB signal, information indicating a total length of the first UWB signal, and information indicating a feedback type of the data measurement result.

25. A communication apparatus, wherein the communication apparatus comprises a transceiver and a processor, configured to implement the method according to any one of claims 1 to 12.

26. A communication apparatus, comprising:

a memory, configured to store a computer program; and
a processor, configured to execute the computer program stored in the memory, to enable the communication apparatus to perform the method according to any one of claims 1 to 12.

27. A chip, wherein the chip comprises at least one processor and an interface, the processor is configured to read and execute instructions stored in a memory, and when the instructions are run, the chip is enabled to perform the method according to any one of claims 1 to 12.

28. A computer-readable storage medium, wherein the computer-readable storage medium stores a computer program, the computer program comprises program instructions, and when the program instructions are executed by a computer, the computer is enabled to perform the method according to any one of claims 1 to 12.

29. A computer program product, comprising computer program code, wherein when the computer program code is run on a computer, the computer is enabled to implement the method according to any one of claims 1 to 12.

30. An apparatus, configured to implement the method according to any one of claims 1 to 12.

101

102

PAN coordinator

(A)

● FFD

○ RFD

◄──► Communication flow

PAN coordinator

(B)

FIG. 1

UWB segment signal #1    UWB segment signal #2    UWB segment signal #3

1 ms    1 ms    1 ms

...

Time

(a)

| Device 1 | | Device 2 | |
| --- | --- | --- | --- |
| UWB module | Narrowband communication module | Narrowband communication module | UWB module |

Data transmission

Positioning and/or ranging

(b)

FIG. 2

FIG. 3

EP 4 478 748 A1

| Initiator device | | Responder device |
|---|---|---|

S410: First frame

S420: Second frame

S430: First UWB signal

S440: Second UWB signal

**Manner 1**

S460: First indication information

S450: First trigger frame

S470: First measurement result

S480: Second trigger frame

S490: Second measurement result

**Manner 2**

S461: Second indication information

S451: Third trigger frame

S471: Third measurement result

S481: Fourth trigger frame

S491: Fourth measurement result

FIG. 4

FIG. 5

FIG. 6

| Initiator device | | Responder device |
|---|---|---|

S710: First frame

S720: Second frame

S730: First UWB signal

S740: Second UWB signal

FIG. 7

FIG. 8

```
┌─────────────────┐          ┌──────────────────┐
│ Initiator device│          │ Responder device │
└────────┬────────┘          └─────────┬────────┘
         │                             │
         ├──── S910: Fourth frame ─────┤
         │                             │
         ├──── S920: Fifth frame ──────┤
         │                             │
         ├──── S930: Sixth frame ──────┤
         │                             │
```

FIG. 9

(a)

| Preamble | SFD | PHR | Payload |
|---|---|---|---|

(b)

$2T_c$

I-Phase: $c_{15}$ | $c_{13}$ | ... | $c_1$ | $c_0$ | ... | $c_{14}$ | $c_{15}$ | ... | $c_1$ | $c_0$ | ... | $c_{14}$

Q-Phase: $c_{14}$ | $c_{12}$ | ... | $c_0$ | $c_1$ | ... | $c_{15}$ | $c_{14}$ | ... | $c_0$ | $c_1$ | ... | $c_{15}$

$T_c$

(c)

FIG. 10

700

| Transceiver unit | 710 |

| Processing unit | 720 |

FIG. 11

800

| Processor | 810 |

| Transceiver | 830 |

820

| Memory 820 |

FIG. 12

## INTERNATIONAL SEARCH REPORT

| | International application No. |
| --- | --- |
| | **PCT/CN2023/078616** |

**A. CLASSIFICATION OF SUBJECT MATTER**

H04W4/02(2018.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, OETXT, VEN, WPABS: 超宽带, 测距, 测量, 感知, 测量结果, 触发, 辅助, 上报, 反馈, 窄带, UWB, Ultra Wideband, ranging, measure, sense, result, trigger, assist, report, feedback, narrowband

**C. DOCUMENTS CONSIDERED TO BE RELEVANT**

| Category* | Citation of document, with indication, where appropriate, of the relevant passages | Relevant to claim No. |
| --- | --- | --- |
| A | US 2021105736 A1 (MAPLE HIGH TECH.) 08 April 2021 (2021-04-08) description, paragraphs [0028]-[0072], and figures 1-4 | 1-30 |
| A | CN 112398601 A (HUAWEI TECHNOLOGIES CO., LTD.) 23 February 2021 (2021-02-23) entire document | 1-30 |
| A | CN 111294875 A (SPREADTRUM COMMUNICATIONS (SHANGHAI) CO., LTD.) 16 June 2020 (2020-06-16) entire document | 1-30 |
| A | CN 113424614 A (BEIJING XIAOMI MOBILE SOFTWARE CO., LTD.) 21 September 2021 (2021-09-21) entire document | 1-30 |
| A | WO 2022007944 A1 (HUAWEI TECHNOLOGIES CO., LTD.) 13 January 2022 (2022-01-13) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 April 2023** | **23 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/078616**

| Patent document cited in search report | | | Publication date (day/month/year) | Patent family member(s) | | | Publication date (day/month/year) |
|---|---|---|---|---|---|---|---|
| US | 2021105736 | A1 | 08 April 2021 | FR | 3064442 | A1 | 28 September 2018 |
| | | | | WO | 2018172721 | A1 | 27 September 2018 |
| | | | | EP | 3603235 | A1 | 05 February 2020 |
| CN | 112398601 | A | 23 February 2021 | WO | 2021027305 | A1 | 18 February 2021 |
| | | | | US | 2022263640 | A1 | 18 August 2022 |
| CN | 111294875 | A | 16 June 2020 | | None | | |
| CN | 113424614 | A | 21 September 2021 | WO | 2022236549 | A1 | 17 November 2022 |
| WO | 2022007944 | A1 | 13 January 2022 | CN | 113921002 | A | 11 January 2022 |

Form PCT/ISA/210 (patent family annex) (July 2022)

53

**REFERENCES CITED IN THE DESCRIPTION**

**Patent documents cited in the description**

- CN 202210200293
- CN 202211414724
- CN 202310146385